# EUROPEAN PATENT APPLICATION

(11) **EP 4 072 118 A1**
(43) Date of publication of application: **12.10.2022**
(21) Application number: 20911246.5
(22) Date of filing: 28.12.2020
(51) Int. Cl.: H04N 5/225

(54) **PHOTOGRAPHING METHOD, PHOTOGRAPHING MODULE, AND ELECTRONIC APPARATUS**

(30) Priority: 31.12.2019 CN 201911416612
(71) Applicant: Huawei Technologies Co., Ltd., Shenzhen, Guangdong 518129, (CN)
(72) Inventor: WANG, Qingping, Shenzhen, Guangdong 518129 (CN); SU, Chen, Shenzhen, Guangdong 518129 (CN); ZHENG, Shisheng, Shenzhen, Guangdong 518129 (CN)
(74) Representative: Epping - Hermann - Fischer
(86) International application number: PCT/CN2020/140436
(87) International publication number: WO 2021/136215

(57) **Abstract**

Embodiments of this application provide a photographing method, a camera module, and an electronic device, and relate to the field of photographing technologies, to implement a zoom function and reduce hardware costs. The camera module includes a first optical path switching element, a first optical steering element, a first fixed-focus lens group, a second fixed-focus lens group, and an image sensor. The first optical path switching element whose position or working state is variable is configured to change an optical path of the first beam from the first fixed-focus lens group, so that the first beam with the optical path changed is directed to the image sensor, or the second beam with the optical path changed is directed to the image sensor. The image sensor is configured to receive the first beam with the optical path changed or receive the second beam with the optical path changed, and generate an image. The first fixed-focus lens group has a first focal length, the second fixed-focus lens group has a second focal length, and the first focal length is different from the second focal length.

## Description

This application claims priority to Chinese Patent Application No. 201911416612.8, filed with China National Intellectual Property Administration on December 31, 2019 and entitled "PHOTOGRAPHING METHOD, CAMERA MODULE, AND ELECTRONIC DEVICE", which is incorporated herein by reference in its entirety.

### TECHNICAL FIELD

This application relates to the field of photographing technologies, and in particular, to a photographing method, a camera module, and an electronic device.

### BACKGROUND

With continuous development of electronic devices, users have an increasingly high photographing requirement on the electronic devices. For example, a user wishes to use an electronic device to photograph close-up and long-range shots with high quality.

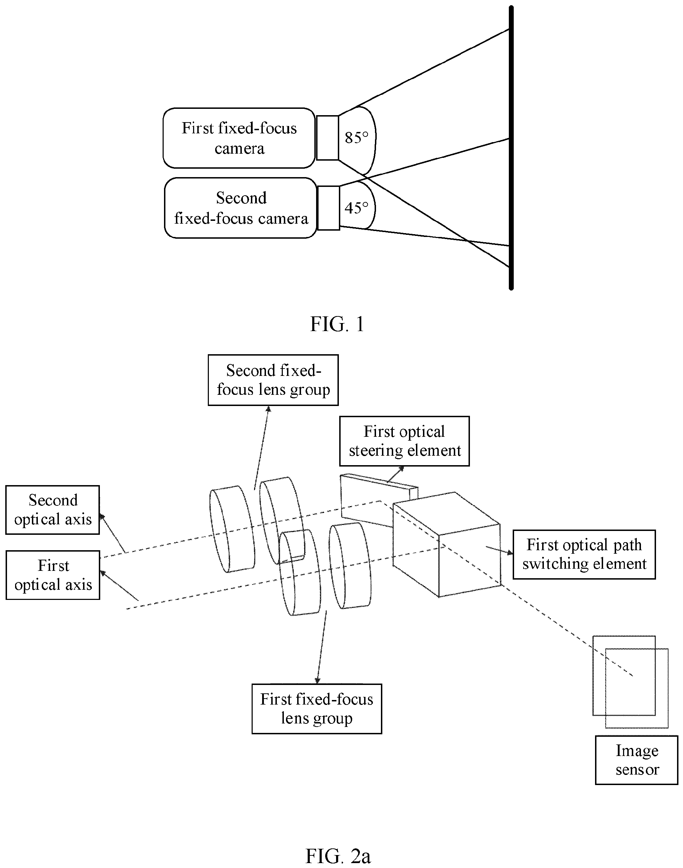

To meet a photographing requirement of a user, a plurality of (≥ 2) vertical fixed-focus cameras may be implanted in a current electronic device. Different fixed-focus cameras have different focal lengths. As shown in FIG. 1, a first fixed-focus camera has a field of view of 85°, and may implement a first focal length, and a second fixed-focus camera has a field of view of 45°, and may implement a second focal length. The first focal length is different from the second focal length. The electronic device may switch between the fixed-focus camera based on an actual photographing requirement of the user, to implement a zoom function.

When the electronic device needs to implement a plurality of focal length segments, a plurality of fixed-focus cameras need to be used. Because each fixed-focus camera needs to have a respective image chip, motor, and the like, hardware costs are relatively high.

### SUMMARY

Embodiments of this application provide a photographing method, a camera module, and an electronic device, to implement a zoom function and reduce hardware costs.

According to a first aspect, an embodiment of this application provides an camera module, including a first optical path switching element, a first optical steering element, a first fixed-focus lens group, a second fixed-focus lens group, and an image sensor. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the image sensor. A position or a working state of the first optical path switching element is variable, which is configured to change an optical path of the first beam from the first fixed-focus lens group, so that the first beam with the optical path changed is directed to the image sensor, or the second beam with the optical path changed is directed to the image sensor. The image sensor is configured to receive the first beam with the optical path changed or receive the second beam with the optical path changed, and generate an image. The first fixed-focus lens group has a first focal length, the second fixed-focus lens group has a second focal length, and the first focal length is different from the second focal length.

The camera module provided in this embodiment of this application may include at least two fixed-focus lens groups (for example, including the first fixed-focus lens group and the second fixed-focus lens group) and one image sensor, and focal lengths of the plurality of fixed-focus lens groups are different, so that total optical path lengths are different. The camera module may project beams from different fixed-focus lens groups to the same image sensor, to implement switching between a plurality of focal length segments by using one image sensor, which can reduce hardware costs. According to a second aspect, an embodiment of this application provides an camera module, including a first optical path switching element, a first optical steering element, a first fixed-focus lens group, a second fixed-focus lens group, an image sensor, and a third optical steering element. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other, and an angle between the third optical steering element and each of the image sensor and the first optical path switching element is 45°. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the third optical steering element. A position or a working state of the first optical path switching element is variable, which is configured to change an optical path of the first beam from the first fixed-focus lens group, so that the first beam with the optical path changed is directed to the third optical steering element, or the second beam with the optical path changed is directed to the third optical steering element. The third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor. The image sensor is configured to receive the first beam with the optical path further changed or receive the second beam with the optical path further changed, and generate an image. The first fixed-focus lens group has a first focal length, the second fixed-focus lens group has a second focal length, and the first focal length is different from the second focal length.

The camera module provided in this embodiment of this application may include at least two fixed-focus lens groups (for example, including the first fixed-focus lens group and the second fixed-focus lens group) and one image sensor, and focal lengths of the plurality of fixed-focus lens groups are different, so that total optical path lengths are different. The camera module may project beams from different fixed-focus lens groups to the same image sensor, to implement switching between a plurality of focal length segments by using one image sensor, which can reduce hardware costs. Moreover, after the third optical steering element is disposed, the width of the camera module is reduced, so that the structure of the camera module is more compact, thereby reducing a space occupied by the camera device in the electronic device, and making the camera module more easily integrated into a small electronic device such as a mobile phone.

In a possible design, based on the camera module provided in the second aspect, a motor is further included. The motor is configured to control the first optical steering element, the first optical path switching element, and the third optical steering element to move along a direction of the first optical axis or the second optical axis. Alternatively, the motor is configured to control the third optical steering element and the image sensor to move along a direction parallel to a horizontal plane and perpendicular to the first optical axis or the second optical axis. In this way, the optical path of the first beam or the second beam in the camera module can be adjusted, to implement a focus function.

In a possible design, based on the camera module provided in the first aspect or the second aspect, the first optical path switching element is a plane mirror or a prism, and an angle between a plane in which the plane mirror or the prism is located and a plane in which the first fixed-focus lens group is located is 45°. In this way, the first beam from the first fixed-focus lens group can be reflected by the plane mirror to the image sensor for imaging. In addition, the first optical path switching element may further block the beam from the second fixed-focus lens group (for example, by disposing an opaque coating on a back surface of a reflective surface of the plane mirror) or reflect the beam to another direction, to prevent the beam from the second fixed-focus lens group from reaching the image sensor for imaging, so as to prevent the beam from the second fixed-focus lens group from interfering with the beam from the first fixed-focus lens group. Alternatively, the plane in which the plane mirror or the prism is located and the plane in which the first fixed-focus lens group are parallel to each other. In this way, the second beam can directly reach the image sensor for imaging without passing through (avoiding) the plane mirror. In addition, the first optical path switching element may further block the beam from the first fixed-focus lens group or reflect the beam to another direction, to prevent the first beam from reaching the image sensor for imaging, so as to prevent the beam from the first fixed-focus lens group from interfering with the beam from the second fixed-focus lens group.

In a possible design, based on the camera module provided in the first aspect or the second aspect, the first optical path switching element is formed by bonding two prisms, a first slot is reserved between bonded surfaces of the two prisms, an angle between a plane in which the first slot is located and the plane in which the first fixed-focus lens group is located is 45°, the first slot is filled with a substance having a first refractive index, or the first slot is filled with a substance having a second refractive index, and the first refractive index is greater than the second refractive index.

In this way, when the first focal length needs to be implemented, that is, when the first beam in the first optical path needs to participate in imaging, the first slot may be filled with the substance having the first refractive index (low-refractive-index substance), and an interface between the prisms and the low-refractive-index substance forms a total reflection interface, so that the first beam from the first fixed-focus lens group is reflected to the image sensor by the total reflection interface. When the second focal length needs to be implemented, that is, when the second beam in the second optical path needs to participate in imaging, the first slot may be filled with the substance having the second refractive index (high-refractive-index substance), and an interface between the prisms and the high-refractive-index substance forms a transmission interface, so that the first beam from the first fixed-focus lens group passes through the transmission interface and reaches the image sensor.

In a possible design, based on the camera module provided in the first aspect or the second aspect, a second optical path switching element is further included. The second optical path switching element is disposed in front of the first fixed-focus lens group or the second fixed-focus lens group. A position or a working state of the second optical path switching element is variable, which is configured to enable the first beam to enter the first fixed-focus lens group and prevent the second beam from entering the second fixed-focus lens group, or configured to enable the second beam to enter the second fixed-focus lens group and prevent the first beam from entering the first fixed-focus lens group.

In this way, interference between different beams can be avoided, to avoid a problem that beams from different fixed-focus lens groups simultaneously enter the image sensor and form a ghost image on the image sensor.

In a possible design, based on the camera module provided in the first aspect or the second aspect, the second optical path switching element is a shade, and the shade is located directly in front of the second fixed-focus lens group, or the shade is located directly in front of the first fixed-focus lens group.

In this way, when the shade is located directly in front of the second fixed-focus lens group, the shade may block the second beam but does not block the first beam, so that the first beam may enter the first fixed-focus lens group while the second beam cannot enter the second fixed-focus lens group, and the first beam entering the first fixed-focus lens group may reach the image sensor along the first optical path to participate in imaging. When the shade is located directly in front of the first fixed-focus lens group, the shade may block the first beam but does not block the second beam, so that the second beam may enter the second fixed-focus lens group while the first beam cannot enter the first fixed-focus lens group, and the second beam entering the second fixed-focus lens group may reach the image sensor along the first optical path to participate in imaging, thereby avoiding interference between different beams.

In a possible design, based on the camera module provided in the first aspect or the second aspect, the second optical path switching element includes two parallel sheets, a second slot is reserved between the two parallel sheets, the second slot includes a first area and a second area, the first area is located directly in front of the first fixed-focus lens group, the second area is located directly in front of the second fixed-focus lens group, and the first area of the second slot is filled with a light-transmitting substance and the second area is filled with a light-blocking substance, or the first area of the second slot is filled with the light-blocking substance and the second area is filled with the light-transmitting substance.

In this way, when the first area of the second slot is filled with the light-blocking substance and the second area is filled with the light-transmitting substance, a beam may enter the second fixed-focus lens group but cannot enter the first fixed-focus lens group, and the second beam entering the second fixed-focus lens group may reach the image sensor along the second optical path to participate in imaging. When the second area of the second slot is filled with the light-blocking substance, and the first area is filled with the light-transmitting substance, a beam may enter the first fixed-focus lens group but cannot enter the second fixed-focus lens group, and the first beam entering the first fixed-focus lens group may reach the image sensor along the first optical path to participate in imaging, thereby avoiding interference between different beams.

In a possible design, based on the camera module provided in the first aspect or the second aspect, a second optical steering element is further included. The second optical steering element is disposed in front of the first fixed-focus lens group and the second fixed-focus lens group, the second optical steering element is disposed obliquely with respect to the plane of the first fixed-focus lens group or the plane of the second fixed-focus lens group, and the second light steering element is configured to reflect the first beam and the second beam from the outside of the camera module, to bend the optical path of the first beam before the first beam enters the first fixed-focus lens group or bend the optical path of the second beam before the second beam enters the second fixed-focus lens group.

In this way, the beam projected by the object may be reflected to the first fixed-focus lens group or the second fixed-focus lens group by the second optical steering element, that is, the second optical steering element and the first fixed-focus lens group or the second fixed-focus lens group may form a periscope structure. Through the periscope design, a manner of disposing the camera module in the electronic device may be more flexible and compact. For example, an optical axis of a fixed-focus lens group (for example, the first optical axis of the first fixed-focus lens group, or the second optical axis of the second fixed-focus lens group) of the camera module may be parallel to a height direction of the electronic device, so that a thickness of the electronic device can be reduced, and the camera module can be more easily integrated into a small electronic device such as a mobile phone.

In a possible design, based on the camera module provided in the first aspect or the second aspect, a motor is further included. The motor is configured to control the second optical steering element to rotate along a rotation axis parallel to the first optical axis or parallel to the horizontal plane and perpendicular to the first optical axis.

In this way, when the camera module shakes, that is, when the camera module slightly moves or rotates, the motor may control the second optical steering element to rotate along a rotation axis that is parallel to the first optical axis or that is parallel to a horizontal plane and perpendicular to the first optical axis, to adjust an angle at which incident light enters the second optical steering element after reflected, so as to change an effective path of a beam passing through the second optical steering element. In the foregoing manner, an optical path changed due to shaking can be compensated, to implement an image stabilization function of the camera module and reduce fuzziness of an image. In a possible design, based on the camera module provided in the first aspect or the second aspect, a motor is further included. The motor is configured to control the first fixed-focus lens group or the second fixed-focus lens group to translate along a direction perpendicular to the horizontal plane or a direction parallel to the horizontal plane and parallel to the first optical axis.

In this way, when the camera module shakes, the motor may control the first fixed-focus lens group or the second fixed-focus lens group to translate along the direction perpendicular to the horizontal plane or the direction parallel to the horizontal plane and parallel to the first optical axis, to adjust the optical path of the first beam or the second beam in the camera module, so as to implement an image stabilization function of the camera module and reduce fuzziness of an image.

In a possible design, based on the camera module provided in the first aspect or the second aspect, a motor is further included. The motor is configured to control the first optical steering element, the first optical path switching element, and the image sensor to move along the direction of the first optical axis or the second optical axis.

In this way, when the camera module is out of focus, the motor may control the first optical steering element, the first optical path switching element, and the image sensor to move along the direction of the first optical axis or the second optical axis, to adjust the optical path of the first beam or the second beam in the camera module, so as to implement a focus function.

In a possible design, based on the camera module provided in the first aspect or the second aspect, the first focal length or the second focal length is 2 to 20 times a focal length of a standard lens.

According to a third aspect, an embodiment of this application provides a photographing method, applied to a camera module. The camera module includes a first optical path switching element, a first optical steering element, a first fixed-focus lens group, a second fixed-focus lens group, and an image sensor. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the image sensor. A position or a working state of the first optical path switching element is variable, which is configured to change an optical path of the first beam from the first fixed-focus lens group, so that the first beam with the optical path changed is directed to the image sensor, or the second beam with the optical path changed is directed to the image sensor. The image sensor is configured to receive the first beam with the optical path changed or receive the second beam with the optical path changed, and generate an image. The first fixed-focus lens group has a first focal length, the second fixed-focus lens group has a second focal length, and the first focal length is different from the second focal length. The method includes: When receiving a first control signal, the first optical path switching element is located at a first position or in a first state, and changes the optical path of the first beam from the first fixed-focus lens group, so that the first beam with the optical path changed reaches the image sensor for imaging. When receiving a second control signal, the first optical path switching element is located at a second position or in a second state, and controls the second beam from the first optical steering element to reach the image sensor for imaging.

The camera module to which the photographing method provided in this embodiment of this application is applied may include at least two fixed-focus lens groups (for example, including the first fixed-focus lens group and the second fixed-focus lens group) and one image sensor, and focal lengths of the plurality of fixed-focus lens groups are different, so that total optical path lengths are different. The camera module may project beams from different fixed-focus lens groups to the same image sensor based on different signals, to implement switching between a plurality of focal length segments by using one image sensor, which can reduce hardware costs.

According to a fourth aspect, an embodiment of this application provides a photographing method, applied to a camera module. The camera module includes a first optical path switching element, a first optical steering element, a first fixed-focus lens group, a second fixed-focus lens group, an image sensor, and a third optical steering element. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other, and an angle between the third optical steering element and each of the image sensor and the first optical path switching element is 45°. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the third optical steering element. A position or a working state of the first optical path switching element is variable, which is configured to change an optical path of the first beam from the first fixed-focus lens group, so that the first beam with the optical path changed is directed to the third optical steering element, or the second beam with the optical path changed is directed to the third optical steering element. The third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor. The image sensor is configured to receive the first beam with the optical path further changed or receive the second beam with the optical path further changed, and generate an image. The first fixed-focus lens group has a first focal length, the second fixed-focus lens group has a second focal length, and the first focal length is different from the second focal length. The method includes: When receiving a first control signal, the first optical path switching element is located at a first position or in a first state, and changes the optical path of the first beam from the first fixed-focus lens group, so that the first beam with the optical path changed reaches, through the third optical steering element, the image sensor for imaging. When receiving a second control signal, the first optical path switching element is located at a second position or in a second state, and enables the second beam from the first optical steering elementsecond fixed-focus lens group to reach, through the third optical steering element, the image sensor for imaging.

In a possible design, based on the method provided in the fourth aspect, the camera module further includes a motor. When the camera module is out of focus, the motor controls the first optical steering element, the first optical path switching element, and the third optical steering element to move along a direction of the first optical axis or the second optical axis, to adjust the optical path of the first beam or the second beam in the camera module. Alternatively, when the camera module is out of focus, the motor controls the third optical steering element and the image sensor to move along a direction parallel to a horizontal plane and perpendicular to the first optical axis or the second optical axis, to adjust the optical path of the first beam or the second beam in the camera module.

In a possible design, based on the method provided in the third aspect or the fourth aspect, the first optical path switching element is a plane mirror or a prism. That the first optical path switching element is located at a first position, and changes the optical path of the first beam from the first fixed-focus lens group, so that the first beam with the optical path changed reaches the image sensor for imaging includes: an angle between a plane in which the plane mirror or the prism is located and a plane in which the first fixed-focus lens group is located is 45°, to reflect the first beam from the first fixed-focus lens group to the image sensor for imaging, and block or reflect the second beam from the second fixed-focus lens group and reflected by the first optical steering element, so as to prevent the second beam from reaching the image sensor for imaging. That the first optical path switching element is located at a second position, and controls the second beam from the first optical steering element to reach the image sensor for imaging includes: the plane in which the plane mirror or the prism is located and the plane in which the first fixed-focus lens group is located are parallel to each other, to control the second beam from the first optical steering element to reach the image sensor for imaging without passing through the first optical path switching element, and block or reflect the first beam from the first fixed-focus lens group, so as to prevent the first beam from reaching the image sensor for imaging.

In a possible design, based on the method provided in the third aspect or the fourth aspect, the first optical path switching element is formed by bonding two prisms, a first slot is reserved between bonded surfaces of the two prisms, and an angle between a plane in which the first slot is located and the plane in which the first fixed-focus lens group is located is 45°. That the first optical path switching element is in a first state, and changes the optical path of the first beam from the first fixed-focus lens group, so that the first beam with the optical path changed reaches the image sensor for imaging includes: the first slot is filled with a substance having a first refractive index, and the plane in which the first slot is located reflects the first beam from the first fixed-focus lens group to the image sensor for imaging. That the first optical path switching element is in a second state, and controls the second beam from the first optical steering element to reach the image sensor for imaging includes: the first slot is filled with a substance having a second refractive index, to control the second beam from the first optical steering element to be transmitted through the first slot to the image sensor for imaging. The first refractive index is greater than the second refractive index.

In a possible design, based on the method provided in the third aspect or the fourth aspect, a second optical path switching element is further included. The second optical path switching element is disposed in front of the first fixed-focus lens group or the second fixed-focus lens group, and a position or a working state of the second optical path switching element is variable. When receiving a third control signal, the second optical path switching element is located at a third position or in a third state, and prevents the second beam from entering the second fixed-focus lens group and enables the first beam to enter the first fixed-focus lens group. When receiving a fourth control signal, the second optical path switching element is located at a fourth position or in a fourth state, and prevents the first beam from entering the first fixed-focus lens group and enables the second beam to enter the second fixed-focus lens group.

In a possible design, based on the method provided in the third aspect or the fourth aspect, the second optical path switching element is a shade. That the second optical path switching element is located at a third position, and prevents the second beam from entering the second fixed-focus lens group and enables the first beam to enter the first fixed-focus lens group includes: the shade is located directly in front of the second fixed-focus lens group, and blocks the second beam but does not block the first beam, so that the first beam enters the first fixed-focus lens group. That the second optical path switching element is located at a fourth position, and prevents the first beam from entering the first fixed-focus lens group and enables the second beam to enter the second fixed-focus lens group includes: the shade is located directly in front of the first fixed-focus lens group, and blocks the first beam but does not block the second beam, so that the second beam enters the second fixed-focus lens group.

In a possible design, based on the method provided in the third aspect or the fourth aspect, the second optical path switching element includes two parallel sheets, a second slot is reserved between the two parallel sheets, the second slot includes a first area and a second area, the first area is located directly in front of the first fixed-focus lens group, and the second area is located directly in front of the second fixed-focus lens group. That the second optical path switching element is in a third state, and prevents the second beam from entering the second fixed-focus lens group and enables the first beam to enter the first fixed-focus lens group includes: the first area of the second slot is filled with a light-transmitting substance and the second area is filled with a light-blocking substance, to transmit the first beam and block the second beam. That the second optical path switching element is in a fourth state, and prevents the first beam from entering the first fixed-focus lens group and enables the second beam to enter the second fixed-focus lens group includes: the first area of the second slot is filled with the light-blocking substance and the second area is filled with the light-transmitting substance, to transmit the second beam and block the first beam.

In a possible design, based on the method provided in the third aspect or the fourth aspect, a second optical steering element is further included. The second optical steering element is disposed in front of the first fixed-focus lens group and the second fixed-focus lens group, the second optical steering element is disposed obliquely with respect to the plane of the first fixed-focus lens group or the plane of the second fixed-focus lens group, and the second optical steering element reflects the first beam and the second beam from the outside of the camera module, to bend the optical path of the first beam before the first beam enters the first fixed-focus lens group, or bend the optical path of the second beam before the second beam enters the second fixed-focus lens group.

In a possible design, based on the method provided in the third aspect or the fourth aspect, a motor is further included. When the camera module shakes, the motor controls the second optical steering element to rotate along a rotation axis parallel to the first optical axis or parallel to the horizontal plane and perpendicular to the first optical axis, to adjust an angle at which the first beam or the second beam enters the second optical steering element.

In a possible design, based on the method provided in the third aspect or the fourth aspect, a motor is further included. When the camera module shakes, the motor controls the first fixed-focus lens group or the second fixed-focus lens group to translate along a direction perpendicular to the horizontal plane or a direction parallel to the horizontal plane and parallel to the first optical axis, to adjust the optical path of the first beam or the second beam in the camera module.

In a possible design, based on the method provided in the third aspect or the fourth aspect, a motor is further included. When the camera module is out of focus, the motor controls the first optical steering element, the first optical path switching element, and the image sensor to move along a direction of the first optical axis or the second optical axis, to adjust the optical path of the first beam or the second beam in the camera module.

In a possible design, based on the method provided in the third aspect or the fourth aspect, the first focal length or the second focal length is 2 to 20 times a focal length of a standard lens.

According to a fifth aspect, an embodiment of this application provides an electronic device, including a processor, a memory, a bus, and a camera module. The processor, the memory, and the camera module are connected to each other by using a bus, the memory is configured to store a program and instructions, and the processor is configured to invoke the program and the instructions stored in the memory to control the camera module. The camera module includes a first optical path switching element, a first optical steering element, a first fixed-focus lens group, a second fixed-focus lens group, and an image sensor. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element. A position or a working state of the first optical path switching element is variable, which is configured to change an optical path of the first beam from the first fixed-focus lens group, so that the first beam with the optical path changed is directed to the image sensor, or the second beam with the optical path changed is directed to the image sensor. The image sensor is configured to receive the first beam with the optical path changed or receive the second beam with the optical path changed, and generate an image. The first fixed-focus lens group has a first focal length, the second fixed-focus lens group has a second focal length, and the first focal length is different from the second focal length.

According to a sixth aspect, an embodiment of this application provides an electronic device, including a processor, a memory, a bus, and a camera module. The processor, the memory, and the camera module are connected to each other by using a bus, the memory is configured to store a program and instructions, and the processor is configured to invoke the program and the instructions stored in the memory to control the camera module. The camera module includes a first optical path switching element, a first optical steering element, a first fixed-focus lens group, a second fixed-focus lens group, an image sensor, and a third optical steering element. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other, and an angle between the third optical steering element and each of the image sensor and the first optical path switching element is 45°. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the third optical steering element. A position or a working state of the first optical path switching element may be changed, which is configured to change an optical path of the first beam from the first fixed-focus lens group, so that the first beam with the optical path changed is directed to the third optical steering element, or the second beam with the optical path changed is directed to the third optical steering element. The third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor. The image sensor is configured to receive the first beam with the optical path further changed or receive the second beam with the optical path further changed, and generate an image. The first fixed-focus lens group has a first focal length, the second fixed-focus lens group has a second focal length, and the first focal length is different from the second focal length.

According to a seventh aspect, an embodiment of this application provides a computer-readable storage medium, including instructions. When the instructions are run on a computer, the computer is enabled to perform any method provided in the third aspect or the fourth aspect.

According to an eighth aspect, an embodiment of this application provides a computer program product including instructions. When the instructions are run on a computer, the computer is enabled to perform any method provided in the third aspect or the fourth aspect.

According to a ninth aspect, an embodiment of this application provides a chip system. The chip system includes a processor, and may further include a memory, to implement any method provided in the third aspect or the fourth aspect. The chip system may include a chip, or may include a chip and another discrete component.

### BRIEF DESCRIPTION OF DRAWINGS

FIG. 1 is a schematic diagram of a structure with a plurality of fixed-focus cameras in a conventional technology;
FIG. 2a is a schematic diagram of a structure of a camera module according to an embodiment of this application;
FIG. 2b is a schematic diagram of signal exchange of a photographing method according to an embodiment of this application;
FIG. 3a is a schematic diagram of a structure of another camera module according to an embodiment of this application;
FIG. 3b is a schematic diagram of a structure of still another camera module according to an embodiment of this application;
FIG. 4a is a schematic diagram of a structure of still another camera module according to an embodiment of this application;
FIG. 4b is a schematic diagram of a structure of still another camera module according to an embodiment of this application;
FIG. 4c is a schematic diagram of a structure of still another camera module according to an embodiment of this application;
FIG. 5a is a schematic diagram of a structure of still another camera module according to an embodiment of this application;
FIG. 5b is a schematic diagram of a structure of still another camera module according to an embodiment of this application;
FIG. 6a is a schematic diagram of a structure of still another camera module according to an embodiment of this application;
FIG. 6b is a schematic flowchart of another photographing method according to an embodiment of this application;
FIG. 7a is a schematic diagram of a structure of still another camera module according to an embodiment of this application;
FIG. 7b is a schematic diagram of a structure of still another camera module according to an embodiment of this application;
FIG. 8a is a schematic diagram of a structure of still another camera module according to an embodiment of this application;
FIG. 8b is a schematic diagram of a structure of still another camera module according to an embodiment of this application;
FIG. 9a is a schematic diagram of a structure of still another camera module according to an embodiment of this application;
FIG. 9b is a schematic diagram of a form of an electronic device according to an embodiment of this application;
FIG. 10a is a schematic diagram of a structure of still another camera module according to an embodiment of this application;
FIG. 10b is a schematic diagram of a form of another electronic device according to an embodiment of this application;
FIG. 11a is a schematic diagram of rotation of a second optical steering element according to an embodiment of this application;
FIG. 11b is a schematic diagram of rotation of a first fixed-focus lens group according to an embodiment of this application;
FIG. 12 is a schematic diagram of movement of a back focus optical system according to an embodiment of this application;
FIG. 13 is a schematic diagram of a structure of still another camera module according to an embodiment of this application;
FIG. 14 is a schematic diagram of a structure of still another camera module according to an embodiment of this application; and
FIG. 15 is a schematic diagram of a hardware structure of an electronic device according to an embodiment of this application.

### DESCRIPTION OF EMBODIMENTS

The following describes the technical solutions in embodiments of this application with reference to the accompanying drawings in embodiments of this application. The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In the description of this application, an orientation or a position relationships indicated by the term "center", "up", "down", "front", "back", "left", "right", "vertical", "horizontal", "top", "bottom", "inside", "outside", "longitudinal", or "transverse" is an orientation or a position relationship shown based on an accompanying drawing, which is only used to facilitate description of this application and simplify description, but is not used to indicate or imply that a related apparatus or element must have a specific orientation or must be constructed and operated based on a specific orientation, and therefore, cannot be understood as a limitation to this application.

In the description of this application, it should be noted that, unless otherwise specified and limited, the term "disposing", "connecting", or "connected" should be understood in a broad sense, for example, may be fixed connection, detachable connection, or integrated connection. The specific meaning of the term in this application may be understood by a person of ordinary skill in the art based on a specific circumstance.

In the description of this application, the term "element" may also be referred to as an "apparatus", a "component", a "member", or a "mechanism", which is not specifically limited in this application. For example, a first optical path switching element may also be referred to as a first optical path switching apparatus, a first optical path switching component (first optical path switching portion), a first optical path switching member, or a first optical path switching mechanism.

Currently, when a user performs photographing by using an electronic device (for example, a mobile phone or a tablet), the user often needs to zoom in an image for photographing due to impact of a photographing distance or a composition design. However, as a zoom multiple increases, a pure digital zoom severely compromises an image resolution. Therefore, an optical zoom function is added to more and more electronic devices. This function optically ensures that images of a plurality of fixed focal length segments can be captured, and in combination with a digital zoom algorithm, an image resolution can be maintained while a wider digital zoom ranges is covered.

For example, the electronic device is a mobile phone. Currently, the most widely used optical zoom hardware solution on the mobile phone is a dual-camera-module structure that includes a primary camera with a standard focal length and a secondary camera with a long focal length. This structure has poor scalability. When images of more focal length segments need to be collected, more fixed-focus cameras must be equipped on the mobile phone. Because each fixed-focus camera needs to have a respective image chip, motor (focus motor, or optical image stabilization (optical image stabilization, OIS) motor), and the like, hardware costs are relatively high.

Embodiments of this application provide a camera module (which may also be referred to as a camera, and is not limited in this application). The camera module may include a plurality of (two or more) fixed-focus lens groups and one image sensor. The plurality of fixed-focus lens groups have different focal lengths and total optical path lengths. The camera module may project beams from different fixed-focus lens groups (beams projected by an object to the fixed-focus lens groups) to the same image sensor based on different signals, to implement switching between a plurality of focal length segments by using one image sensor, which can reduce hardware costs.

Moreover, the camera module provided in the embodiments of this application is a single camera module, which can implement optical image stabilization and auto-focus functions by using one set of focus motors and optical image stabilization motors, thereby further reducing hardware costs.

Referring to FIG. 2a, an embodiment of this application provides an image module, including an image sensor, at least two fixed-focus lens groups (which, for example, may include a first fixed-focus lens group and a second fixed-focus lens group), a first optical path switching element, and a first optical steering element (which may also be referred to as a first optical path steering element or a first reflection element). The first optical path switching element is disposed directly behind the first fixed-focus lens group and at the side rear of the second fixed-focus lens group. The first optical steering element is disposed directly behind the second fixed-focus lens group. The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other (it may be understood that the optical axis and the second optical axis may not be completely parallel to each other due to a slight machining error in a manufacturing process). The image sensor is disposed on one side of the first optical path switching element, and a plane in which the first fixed-focus lens group (or the second fixed-focus lens group) is located and a plane in which the image sensor is located may be perpendicular to each other.

The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the image sensor. A position or a working state of the first optical path switching element is variable, which is configured to change an optical path of the first beam from the first fixed-focus lens group, so that the first beam with the optical path changed is directed to the image sensor, or the second beam with the optical path changed is directed to the image sensor. The image sensor is configured to receive the first beam with the optical path changed or receive the second beam with the optical path changed, and generate an image. The first fixed-focus lens group has a first focal length, the second fixed-focus lens group has a second focal length, and the first focal length is different from the second focal length.

The fixed-focus lens group may also be referred to as a fixed-focus lens, and may be configured to refract a beam (light/light beam) projected from an object outside the camera module. The fixed-focus lens group may include a plurality of lenses, and the plurality of lenses may be parallel to each other. The first fixed-focus lens group and the second fixed-focus lens group may include a same quantity of lenses (for example, the first fixed-focus lens group or the second fixed-focus lens group may include two lenses) or different quantities of lenses (for example, the first fixed-focus lens group may include two lenses, and the second fixed-focus lens group may include three lenses). The first fixed-focus lens group and the second fixed-focus lens group may be made of a plastic material, and another transparent optical material such as a glass material may alternatively be used, which is not specifically limited herein. Moreover, the first fixed-focus lens group and the second fixed-focus lens group may be made of materials with different optical characteristics (for example, different dispersion coefficients and/or different refractive indices). For example, the first fixed-focus lens group may be made of a plastic material, and the second fixed focus lens group may be made of a glass material. In addition, the first fixed-focus lens group and the second fixed-focus lens group may be circular lenses, or may be in another shape, such as an ellipse, a rectangle, or a rectangle with rounded corners, which is not specifically limited herein.

The image sensor may also be referred to as an image chip, a sensor element, or a photosensitive element, which may be configured to perform optical-to-electrical conversion on an obtained beam (light) to generate a digital image. The image sensor may be a charge coupled device (charge coupled device, CCD), or may be a complementary metal-oxide semiconductor (complementary metal-oxide semiconductor, CMOS) element, which is not specifically limited herein. For example, the image sensor may be a blue glass sensor.

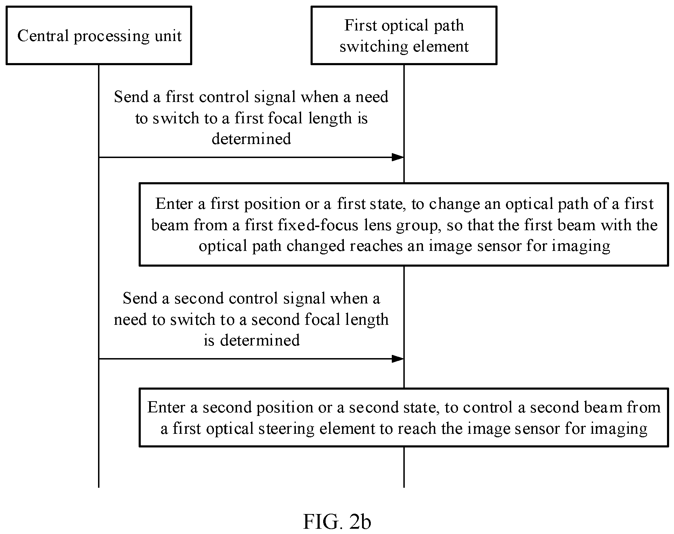

It may be understood that the camera module may be disposed in an electronic device. When a user needs to photograph the object at the first focal length, a central processing unit may send a first control signal to the first optical path switching element in response to a corresponding operation performed by the user on the electronic device. As shown in FIG. 2b, the first optical path switching element is configured as follows: When receiving the first control signal, the first optical path switching element is located at a first position or in a first state, and changes the optical path of the first beam from the first fixed-focus lens group, so that the first beam with the optical path changed reaches the image sensor for imaging. When the user needs to photograph the object at the second focal length, the central processing unit may send a second control signal to the first optical path switching element in response to a corresponding operation performed by the user on the electronic device. When receiving the second control signal, the first optical path switching element is located at a second position or in a second state, and controls the second beam from the first optical steering element to reach the image sensor for imaging.

It should be noted that, in this embodiment of this application, the first beam refers to a beam passing through the first fixed-focus lens group (that is, a beam received or refracted by the first fixed-focus lens group). Before passing through the first fixed-focus lens group or after passing through the first fixed-focus lens group, the first beam may further pass through one or more optical elements. It may be understood that, when passing through each optical element (for example, refracted, reflected, or transmitted by the optical element), the first beam may be partially lost (that is, an electromagnetic wave that makes up the first beam may be lost). In this application, it may be considered that beams before and after passing through an optical element are a same beam, whose optical path may change, but electromagnetic waves that make up the beams may be considered as the same. Similarly, in this embodiment of this application, the second beam refers to a beam passing through the second fixed-focus lens group. Before passing through the second fixed-focus lens group or after passing through the second fixed-focus lens group, the second beam may further pass through one or more optical elements. It may be understood that, when passing through each optical element, the second beam may be partially lost (that is, an electromagnetic wave that makes up the second beam may be lost). In this application, it may be considered that beams before and after passing through an optical element are a same beam, whose optical path may change, but electromagnetic waves that make up the beams may be considered as the same.

For example, when receiving the first control signal sent by the central processing unit, the first optical path switching element may work in a reflection mode, and reflect the first beam from the first fixed-focus lens group (that is, the beam refracted by the first fixed-focus lens group) to reach the image sensor. When receiving the second control signal sent by the central processing unit, the first optical path switching element may work in a transmission mode, and control the second beam from the second fixed-focus lens group and reflected by the first optical steering element to avoid or be transmitted through the first optical path switching element to reach the image sensor.

The first focal length or the second focal length is 2 to 20 times a focal length of a standard lens. For example, the first focal length may be 5 times (5X lens) the focal length of the standard lens, and the second focal length may be 10 times (10× lens) the focal length of the standard lens. The standard lens is a general term for lenses whose angles of view (fields of view) are 45° to 50°. The focal length of the standard lens is approximately equal to a diagonal length of a frame photographed. For example, the focal length of the standard lens may be 28 mm. In this case, the first focal length and the second focal length may be different values between 56 mm and 560 mm. Alternatively, it may be considered that equivalent focal lengths of the first fixed-focus lens group and the second fixed-focus lens group are different values between 56 mm and 560 mm. The equivalent focal length is a focal length corresponding to the fixed-focus lens group when a diagonal of the image sensor is proportionally scaled to 43.27 mm based on a field of view.

It may be understood that, because the first optical path switching element is disposed at the side rear of the second fixed-focus lens group, the first optical steering element needs to be disposed directly behind the second fixed-focus lens group, and the first optical steering element needs to be disposed along a direction of the second optical axis, so that the first optical steering element may reflect the second beam from the second fixed-focus lens group to a direction in which the first optical path switching element is located. The first optical steering element may be disposed obliquely with respect to the second fixed-focus lens group. For example, an angle between a plane in which the first optical steering element is located and a plane in which the second fixed-focus lens group is located may be 45°. The first optical steering element may be a plane mirror, or may be in another form, for example, a prism, and an inclined surface of the prism may be used as a reflection surface. A specific form of the first optical path switching element is not limited herein.

When the first focal length (for example, the 5X lens) needs to be implemented, based on the first control signal, the first optical path switching element may reflect the beam from the first fixed-focus lens group, that is, perform a function of deflecting a light direction of the beam from the first fixed-focus lens group. When the second focal length (for example, the 10X lens) needs to be implemented, based on the second control signal, the first optical path switching element controls the second beam from the second fixed-focus lens group and reflected by the first optical steering element to avoid or be transmitted through the first optical path switching element to reach the image sensor, that is, does not perform a function of deflecting a light direction of the second beam from the second fixed-focus lens group and reflected by the first optical steering element.

It may be understood that optical paths of beams reaching the image sensor through fixed-focus lens groups of different focal lengths are different. For example, an optical path of the first beam reaching the image sensor through the first fixed-focus lens group is different from an optical path of the second beam reaching the image sensor through the second fixed-focus lens group.

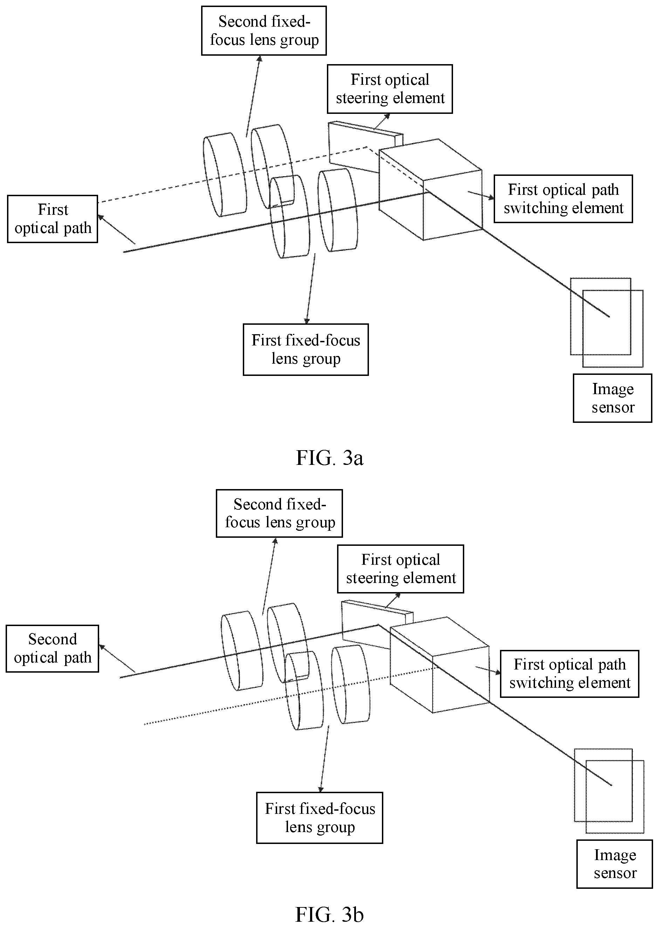

For example, as shown in FIG. 3a, the first optical path may be defined as an optical path in which the first beam passes through the first fixed-focus lens group and is reflected at the first optical path switching element, and finally is imaged at the image sensor. As shown in FIG. 3b, the second optical path is defined as an optical path in which the second beam passes through the second fixed-focus lens group, is reflected by the first optical steering element and then transmitted through the first optical path switching element, and finally is imaged at the image sensor. The first optical path and the second optical path respectively pass through different fixed-focus modules, so that different focal lengths can be implemented, as well as different optical path lengths.

In a possible design, when receiving the first control signal, the first optical path switching element may be located at the first position or in the first state, and reflect the first beam from the first fixed-focus lens group to the image sensor. When receiving the second control signal, the first optical path switching element may be located at the second position or in the second state, and control the second beam from the second fixed-focus lens group and reflected by the first optical steering element to avoid or be transmitted through the first optical path switching element to reach the image sensor.

The first optical path switching element may be a mechanical element or an electrically controlled element, whose function is to guide the first beam in the first optical path or the second beam in the second optical path to reach the image sensor, which is equivalent to an optical path switching shutter (shutter).

If the first optical path switching element is a mechanical element, the mechanical element may be a movable or rotatable plane mirror. The plane mirror may be switched between the first position and the second position to respectively guide the first beam in the first optical path or the second beam in the second optical path to reach the image sensor. It may be understood that a movement control apparatus or a rotation control apparatus (for example, a motor) may be disposed next to (for example, on a front, rear, left, or right side of) the plane mirror, to drive the plane mirror to switch between the first position and the second position.

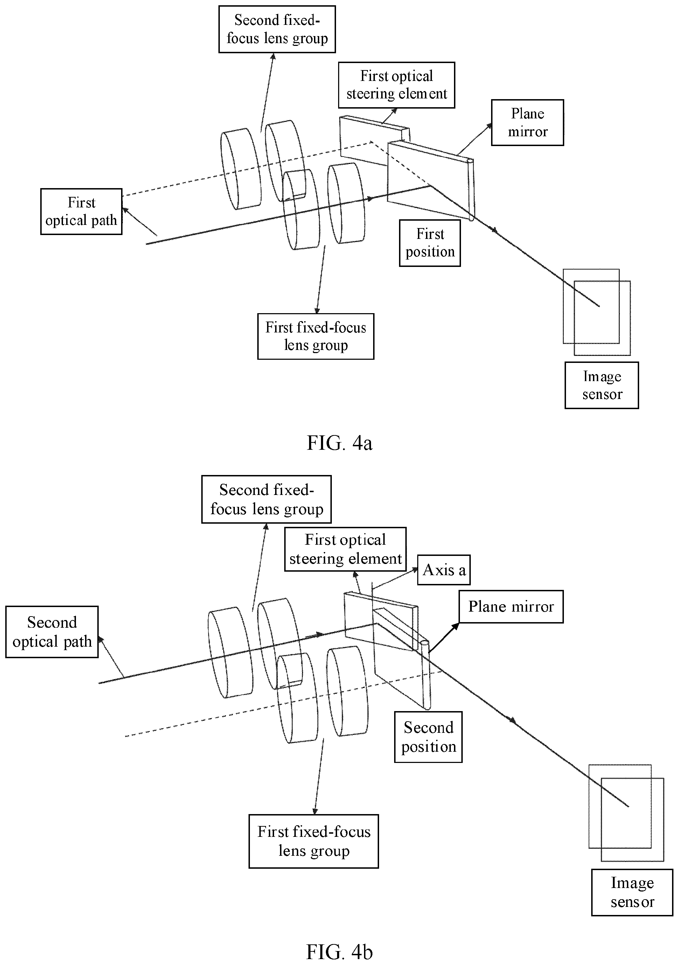

For example, as shown in FIG. 4a, when the first focal length needs to be implemented, that is, when the first beam in the first optical path needs to participate in imaging, the plane mirror may be located at the first position. In this case, an angle between a plane in which the plane mirror is located and a plane in which the first fixed-focus lens group is located may be 45°, and the first beam from the first fixed-focus lens group may be reflected by the plane mirror to the image sensor for imaging. In addition, the first optical path switching element may further block the beam from the second fixed-focus lens group (for example, by disposing an opaque coating on a back surface of a reflective surface of the plane mirror) or reflect the beam to another direction, to prevent the beam from the second fixed-focus lens group from reaching the image sensor for imaging, so as to prevent the beam from the second fixed-focus lens group from interfering with the beam from the first fixed-focus lens group.

As shown in FIG. 4b, when the second focal length needs to be implemented, that is, when the second beam of the second optical path needs to participate in imaging, the plane mirror may be located at the second position. The plane mirror located at the first position may rotate 45° clockwise along an axis a to reach the second position. In this case, the plane in which the plane mirror is located and the plane in which the first fixed-focus lens group is located are parallel to each other, and the second beam may directly reach the image sensor for imaging without passing through (avoiding) the plane mirror. In addition, the first optical path switching element may further block the beam from the first fixed-focus lens group or reflect the beam to another direction, to prevent the first beam from reaching the image sensor for imaging, so as to prevent the beam from the first fixed-focus lens group from interfering with the beam from the second fixed-focus lens group.

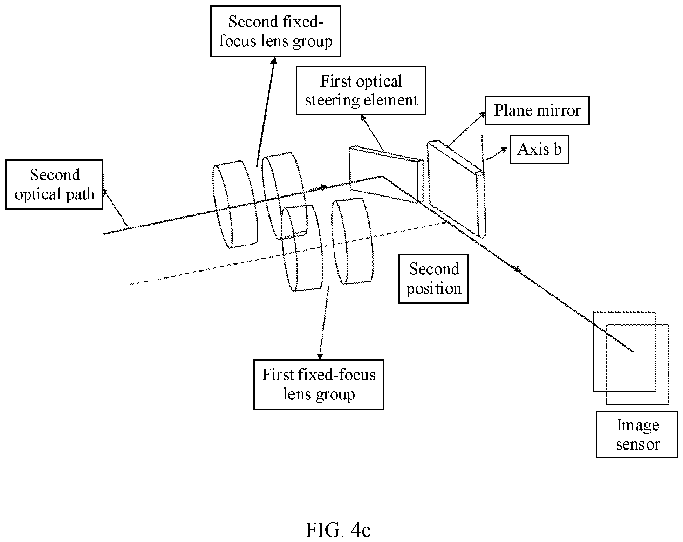

As shown in FIG. 4c, when the second focal length needs to be implemented, that is, when the second beam of the second optical path needs to participate in imaging, the plane mirror may be located at the second position. The plane mirror located at the first position may rotate 45° clockwise along an axis b to reach the second position. In this case, the plane in which the plane mirror is located and the plane in which the first fixed-focus lens group is located are parallel to each other, and the second beam may avoid the plane mirror and directly reach the image sensor. Optionally, the mechanical component may alternatively be a movable prism or a rotatable prism. This is not limited in this application.

If the first optical path switching element is an electrically controlled element, the electrically controlled element may be formed by bonding two prisms (for example, triangular prisms). A first slot (gap) is reserved between bonded surfaces. A plane in which the first slot is located is disposed obliquely with respect to the plane in which the second fixed-focus lens group is located. For example, an angle between the plane in which the first slot is located and the plane in which the first fixed-focus lens group is located may be 45°. The first slot may be filled with a substance having a first refractive index, that is, a high-refractive-index substance (for example, a substance having a higher refractive index than the prism, such as oil droplets). Alternatively, the first slot may be filled with a substance having a second refractive index, that is, a low-refractive-index substance (for example, a substance having a lower refractive index than the prism, such as air). It may be understood that an electrical control apparatus may be disposed next to (for example, on a front, rear, left, or right side of) the electrically controlled element. The electrical control apparatus may fill the first slot with the high-refractive-index substance or the low-refractive-index substance.

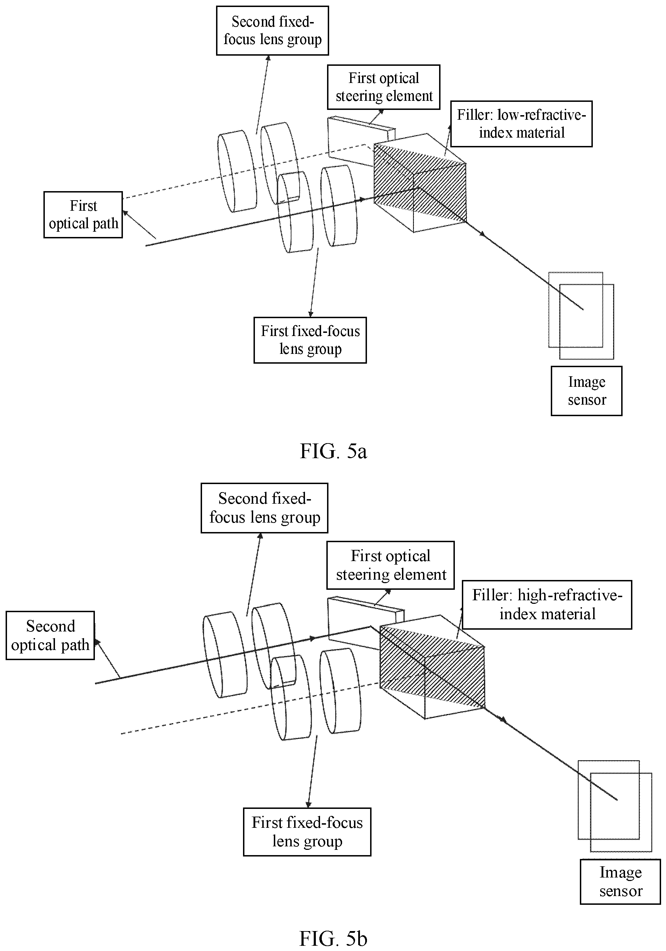

For example, as shown in FIG. 5a, when the first focal length needs to be implemented, that is, when the first beam in the first optical path needs to participate in imaging, the first optical path switching element may be in the first state. In this case, the first slot is filled with the low-refractive-index substance, and an interface between the prisms and the low-refractive-index substance forms a total reflection interface, so that the first beam from the first fixed-focus lens group is reflected to the image sensor by the total reflection interface. As shown in FIG. 5b, when the second focal length needs to be implemented, that is, when the second beam in the second optical path needs to participate in imaging, the first optical path switching element may be in the second state. In this case, the first slot is filled with the high-refractive-index substance, and an interface between the prisms and the high-refractive-index substance forms a transmission interface, so that the first beam from the first fixed-focus lens group passes through the transmission interface and reaches the image sensor.

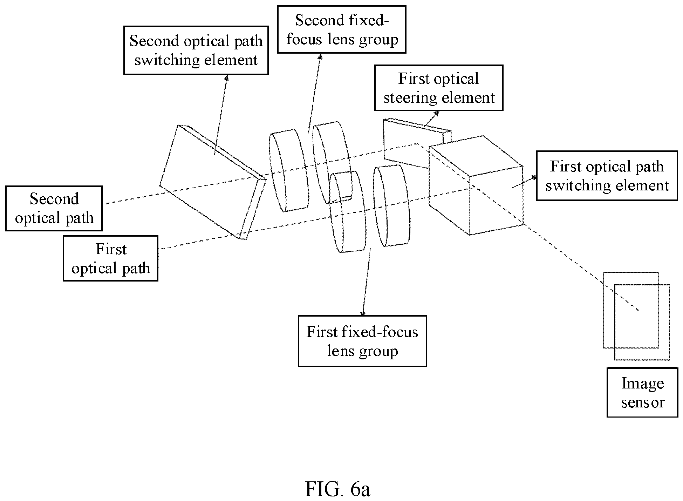

In a possible design, as shown in FIG. 6a, the camera module may further include a second optical path switching element. The second optical path switching element is disposed in front of the first fixed-focus lens group or the second fixed-focus lens group. A position or a working state of the second optical path switching element is variable, which is configured to enable the first beam to enter the first fixed-focus lens group and prevent the second beam from entering the second fixed-focus lens group, or configured to enable the second beam to enter the second fixed-focus lens group and prevent the first beam from entering the first fixed-focus lens group. The second optical path switching element may be disposed in parallel or obliquely with respect to a plane in which the first fixed-focus lens group and the second fixed-focus lens group are located. This is not limited in this application.

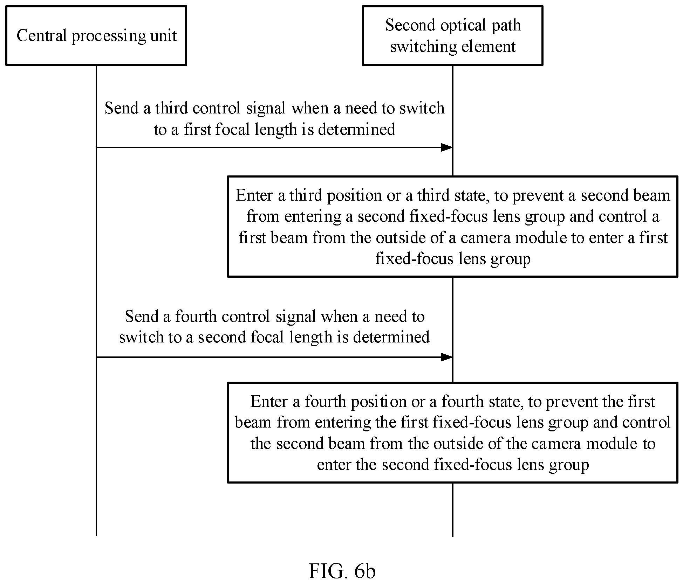

As shown in FIG. 6b, when the user needs to photograph the object at the first focal length, the central processing unit may send a third control signal to the first optical path switching element in response to a corresponding operation of the user. When receiving the third control signal sent by the central processing unit, the second optical path switching element may be located at a third position or in a third state, and prevent the second beam from entering the second fixed-focus lens group and control a beam (the first beam) from the outside of the camera module to enter (incident) the first fixed-focus lens group. When the user needs to photograph the object at the second focal length, the central processing unit may send a fourth control signal to the first optical path switching element in response to a corresponding operation performed of the user. When receiving the fourth control signal sent by the central processing unit, the second optical path switching element may be located at a fourth position or in a fourth state, and prevent the first beam from entering the first fixed-focus lens group and control a beam (the second beam) from the outside of the camera module to enter the second fixed-focus lens group. In this way, interference between different beams can be avoided, to avoid a problem that beams from different fixed-focus lens groups simultaneously enter the image sensor and form a ghost image on the image sensor. The third control signal and the first control signal may be a same control signal or different control signals, and the fourth control signal and the second control signal may be a same control signal or different control signals. This is not limited in this application.

The second optical path switching element may be a mechanical element or an electrically controlled element, whose function is to guide a beam to enter the first fixed-focus lens group or the second fixed-focus lens group, which is equivalent to an optical path switching shutter.

If the second optical path switching element is a mechanical element, the mechanical element may be a shade. A guide rail and a motion control apparatus may be disposed next to (for example, on a front, rear, left, or right side of) the shade. The shade and the motion control apparatus may drive the shade to switch between the third position and the fourth position, so as to guide beams to enter the first fixed-focus lens group and the second fixed-focus lens group, respectively.

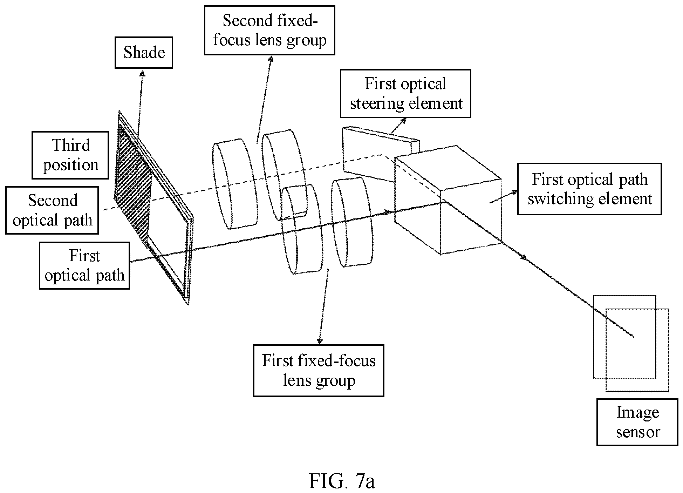

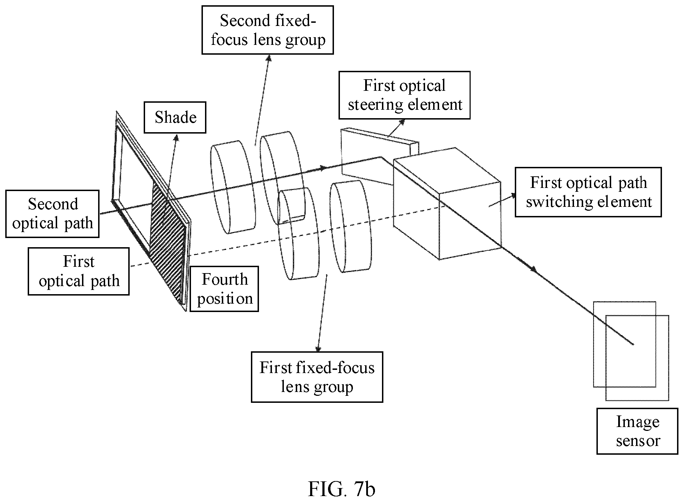

For example, as shown in FIG. 7a, when the shade is located at the third position, that is, when the shade is located directly in front of the second fixed-focus lens group, the shade may block the second beam but does not block the first beam, so that the first beam may enter the first fixed-focus lens group while the second beam cannot enter the second fixed-focus lens group, and the first beam entering the first fixed-focus lens group may reach the image sensor along the first optical path to participate in imaging. As shown in FIG. 7b, when the shade is located at the fourth position, that is, when the shade is located directly in front of the first fixed-focus lens group, the shade may block the first beam but does not block the second beam, so that the second beam may enter the second fixed-focus lens group while the first beam cannot enter the first fixed-focus lens group, and the second beam entering the second fixed-focus lens group may reach the image sensor along the first optical path to participate in imaging.

A material of the shade may be various matte materials, or plastic subjected to frosting processing or metal subjected to extinction processing, and a shape of the shade may be round, square, or the like, which are not limited in this application.

If the second optical path switching element is an electrically controlled element, the electrically controlled element may include two parallel sheets, and a second slot is reserved between the two parallel sheets. Different fillers, for example, a light-transmitting substance (for example, air) or a light-blocking substance (for example, a dark liquid, such as aqueous ink or oily ink) may be injected into different areas of the second slot, to guide beams to enter the first fixed-focus lens group and the second fixed-focus lens group, respectively.

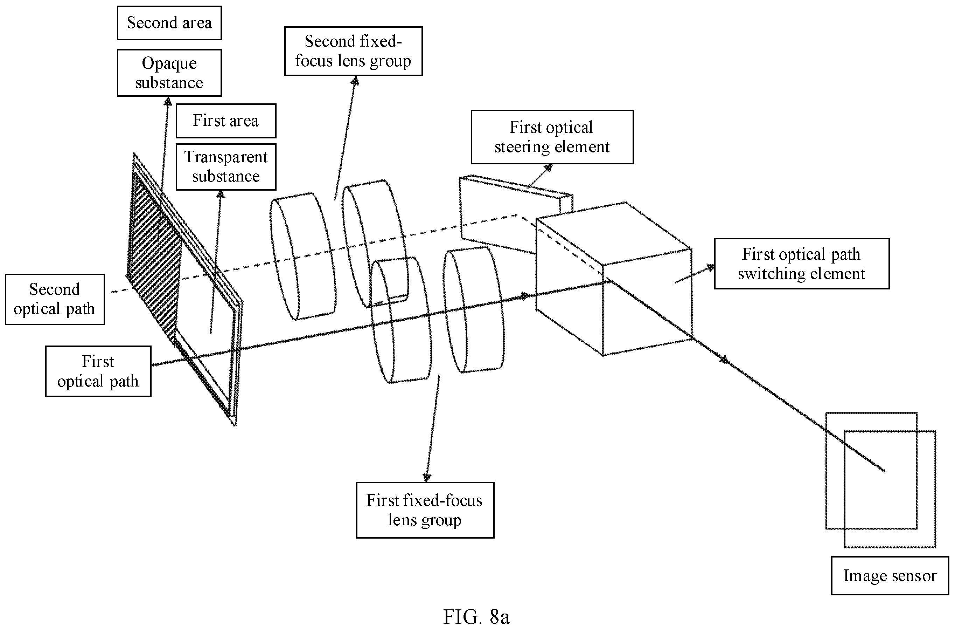

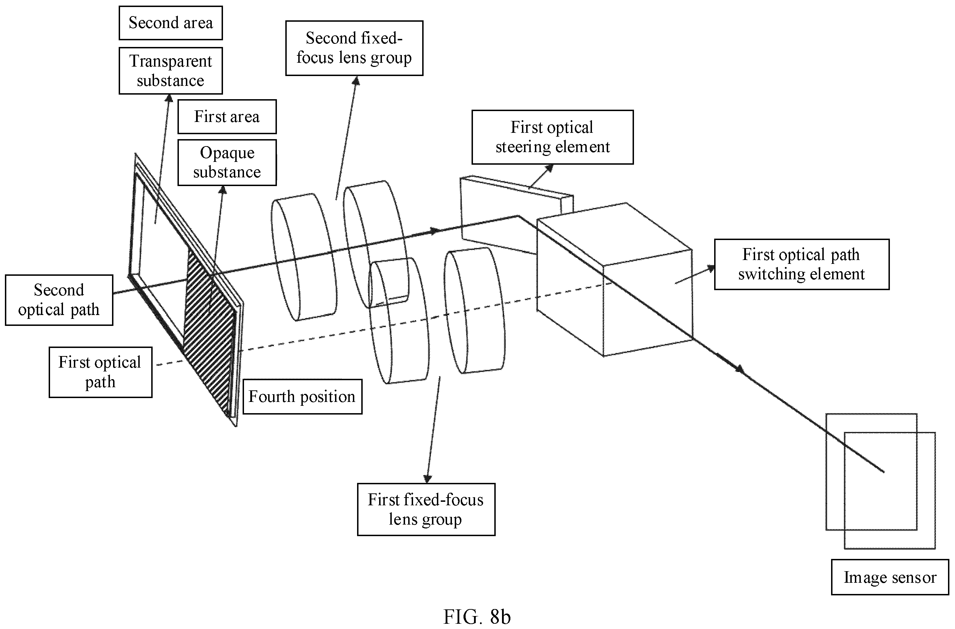

For example, as shown in FIG. 8a, when the electrically controlled element is in the third state, that is, when a first area of the second slot is filled with the light-transmitting substance, and a second area is filled with the light-blocking substance, a beam may enter the first fixed-focus lens group but cannot enter the second fixed-focus lens group, and the first beam entering the first fixed-focus lens group may reach the image sensor along the first optical path to participate in imaging. As shown in FIG. 7b, when the electrically controlled element is in the fourth state, that is, when the first area of the second slot is filled with the light-blocking substance and the second area is filled with the light-transmitting substance, a beam may enter the second fixed-focus lens group but cannot enter the first fixed-focus lens group, and the second beam entering the second fixed-focus lens group may reach the image sensor along the second optical path to participate in imaging.

A material of the sheet is corrosion-resistant optical plastic or optical glass, and a shape of the sheet may be square, round, or the like, which are not limited in this application.

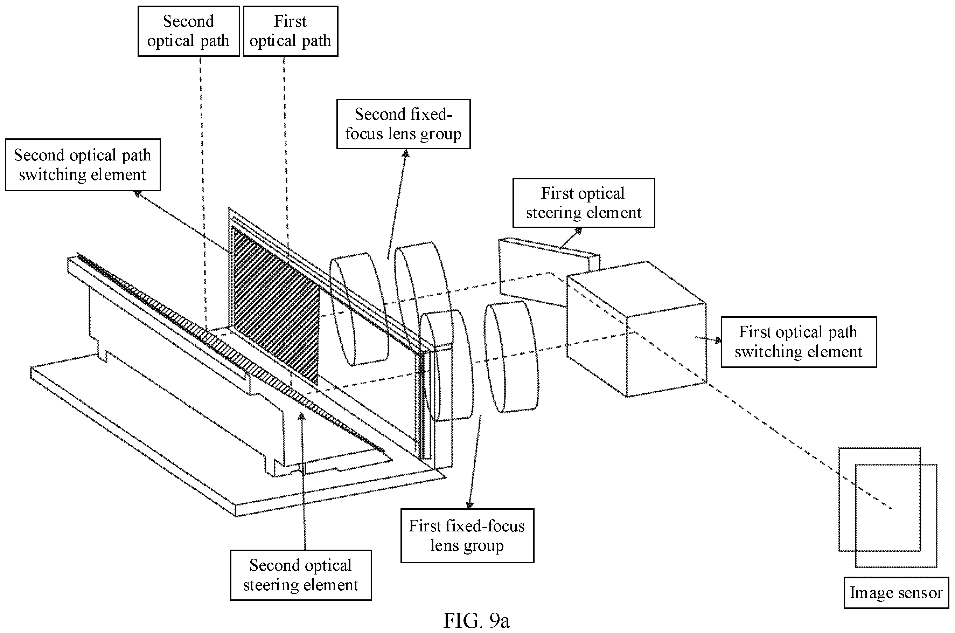

In a possible design, as shown in FIG. 9a, the camera module may further include a second optical steering element (which may also be referred to as a second optical path steering element or a second reflection element). The second optical steering element is disposed obliquely with respect to the plane of the first fixed-focus lens group or the plane of the second fixed-focus lens group, to bend the optical path of the first beam before the first beam enters the first fixed-focus lens group or the optical path of the second beam before the second beam enters the second fixed-focus lens group. In this way, the beam projected by the object may be reflected to the first fixed-focus lens group or the second fixed-focus lens group by the second optical steering element, that is, the second optical steering element and the first fixed-focus lens group or the second fixed-focus lens group may form a periscope structure. Through the periscope design, a manner of disposing the camera module in the electronic device may be more flexible and compact. For example, an optical axis of a fixed-focus lens group (for example, the first optical axis of the first fixed-focus lens group, or the second optical axis of the second fixed-focus lens group) of the camera module may be parallel to a height direction of the electronic device, so that a thickness of the electronic device can be reduced, and the camera module can be more easily integrated into a small electronic device such as a mobile phone.

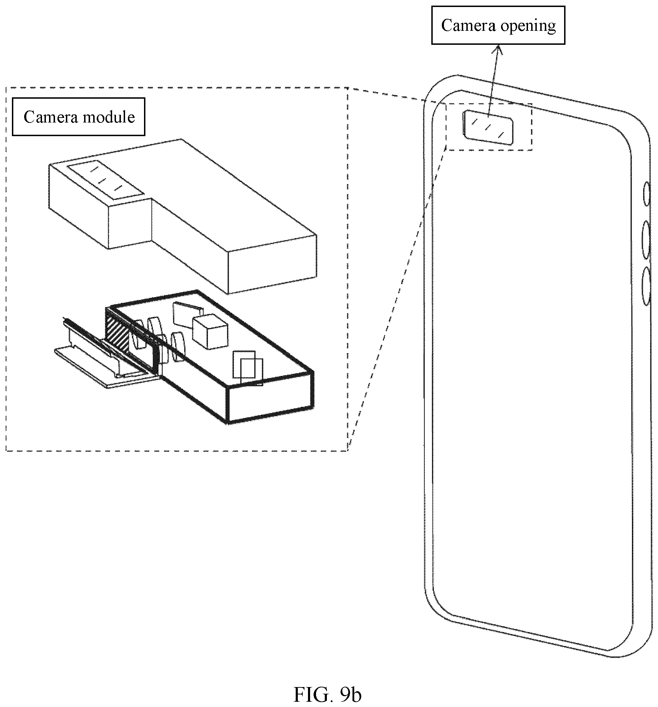

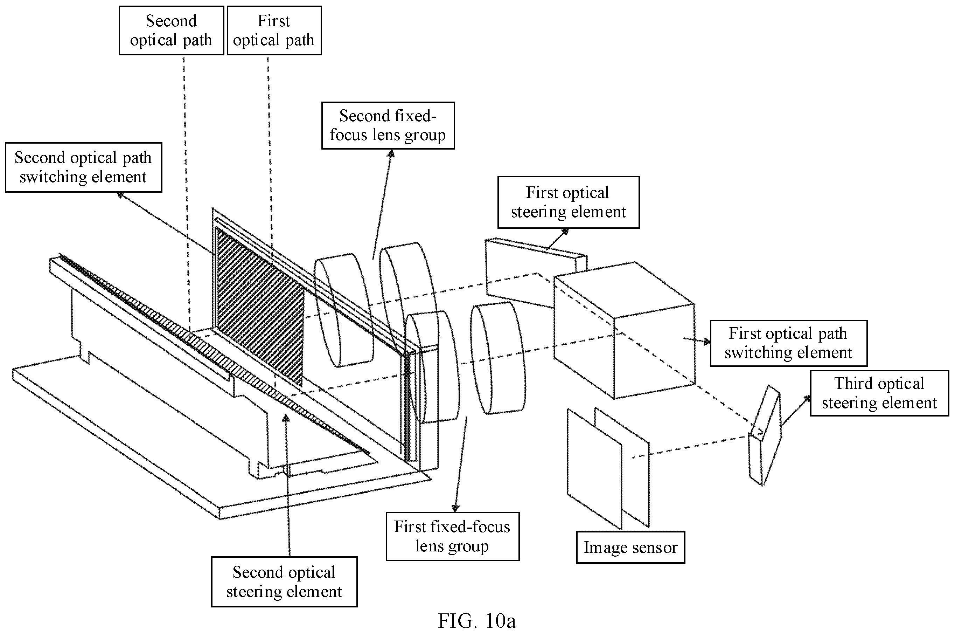

FIG. 9b is a schematic diagram of a form of an electronic device (for example, a mobile phone) provided with a camera module according to an embodiment of this application. The camera module may be disposed in a camera opening. The camera module may include a housing and optical elements (for example, fixed-focus lens groups, a first optical path switching element, and an image sensor), and the optical elements may be disposed in a cavity formed by the housing. Through the periscope structure design, an optical axis of a fixed-focus lens group (for example, a first optical axis of a first fixed-focus lens group, or a second optical axis of a second fixed-focus lens group) of the camera module may be parallel to a height direction of the electronic device, so that a thickness of the electronic device can be reduced. In a possible design, as shown in FIG. 10a, the camera module may include a first optical path switching element, a first optical steering element, a first fixed-focus lens group, a second fixed-focus lens group, an image sensor, and a third optical steering element (which may also be referred to as a third optical path steering element or a third reflection element). The first fixed-focus lens group and the first optical path switching element are disposed along a first optical axis, and the first optical axis is an optical axis of the first fixed-focus lens group. The second fixed-focus lens group and the first optical steering element are disposed along a second optical axis, and the second optical axis is an optical axis of the second fixed-focus lens group. The first optical axis and the second optical axis are parallel to each other, and an angle between the third optical steering element and each of the image sensor and the first optical path switching element is 45°. The first fixed-focus lens group is configured to receive a first beam from the outside of the camera module. The second fixed-focus lens group is configured to receive a second beam from the outside of the camera module. The first optical steering element is configured to change an optical path of the second beam from the second fixed-focus lens group, so that the second beam with the optical path changed is directed to the first optical path switching element and the third optical steering element. A position or a working state of the first optical path switching element is variable, which is configured to change an optical path of the first beam from the first fixed-focus lens group, so that the first beam with the optical path changed is directed to the third optical steering element, or the second beam with the optical path changed is directed to the third optical steering element. The third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor. The image sensor is configured to receive the first beam with the optical path further changed or receive the second beam with the optical path further changed, and generate an image. The first fixed-focus lens group has a first focal length, the second fixed-focus lens group has a second focal length, and the first focal length is different from the second focal length.

When receiving a first control signal, the first optical path switching element is located at a first position or in a first state, and changes the optical path of the first beam from the first fixed-focus lens group, so that the first beam with the optical path changed reaches, through the third optical steering element, the image sensor for imaging. When receiving a second control signal, the first optical path switching element is located at a second position or in a second state, and enables the second beam from the first optical steering elementsecond fixed-focus lens group to reach, through the third optical steering element, the image sensor for imaging.

It should be noted that, because the angle between the third optical steering element and each of the first optical path switching element and the image sensor may be 45°, in this case, a plane in which the first fixed-focus lens group (or the second fixed-focus lens group) is located may be parallel to that of the image sensor. In this way, a width of the camera module can be reduced, and a structure of the camera module is more compact.

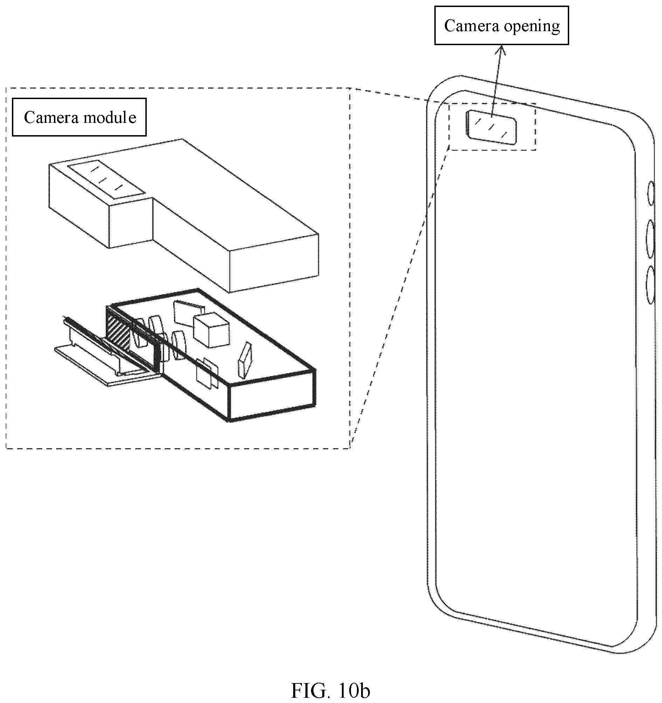

FIG. 10b is a schematic diagram of a form of an electronic device (for example, a mobile phone) provided with a camera module according to an embodiment of this application. The camera module may be disposed in a camera opening. The camera module may include a housing and optical elements (for example, fixed-focus lens groups, a first optical path switching element, and an image sensor), and the optical elements may be disposed in a cavity formed by the housing. After the third optical steering element is disposed, the width of the camera module is reduced, so that the structure of the camera module is more compact, thereby reducing a space occupied by the camera device in the electronic device, and making the camera module more easily integrated into a small electronic device such as a mobile phone.

In some embodiments, the camera module may further include a motor. When the camera module shakes, that is, when the camera module slightly moves or rotates, the motor may control the second optical steering element to rotate along a rotation axis parallel to the first optical axis or parallel to a horizontal plane and perpendicular to the first optical axis, to adjust an angle at which incident light enters the second optical steering element after reflected, so as to change an effective path of a beam passing through the second optical steering element. In the foregoing manner, an optical path changed due to shaking can be compensated, to implement an image stabilization function of the camera module and reduce fuzziness of an image.

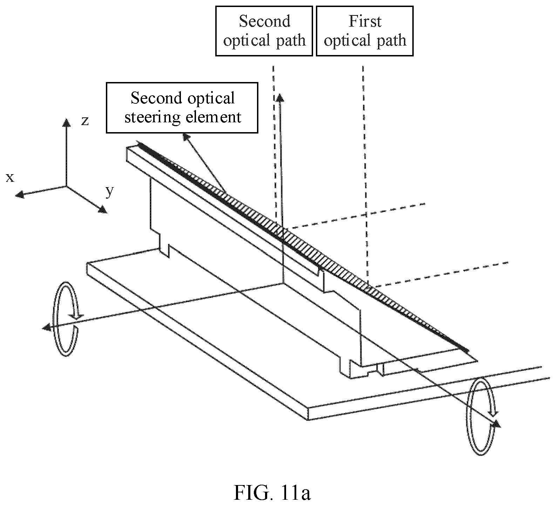

For example, as shown in FIG. 11a, when the camera module shakes, the motor may drive the second optical steering element to rotate along an x axis and/or a y axis in a three-dimensional space, to adjust an angle at which a beam enters an imaging system after reflected by the second optical steering element, and eliminate impact of image quality degradation caused by shaking of the camera module. The x axis is parallel to the first optical axis of the first fixed-focus lens group or the second optical axis of the second fixed-focus lens group. The y axis is parallel to a horizontal plane, and perpendicular to the first optical axis of the first fixed-focus lens group or the second optical axis of the second fixed-focus lens group. It may be understood that, the motor may be disposed next to, for example, on a front, rear, left, or right side of, the second optical steering element, which is not specifically limited in this application.

In a possible design, when the camera module shakes, the motor is configured to control the first fixed-focus lens group or the second fixed-focus lens group to translate along a direction perpendicular to the horizontal plane or a direction parallel to the horizontal plane and parallel to the first optical axis, to adjust the optical path of the first beam or the second beam in the camera module.

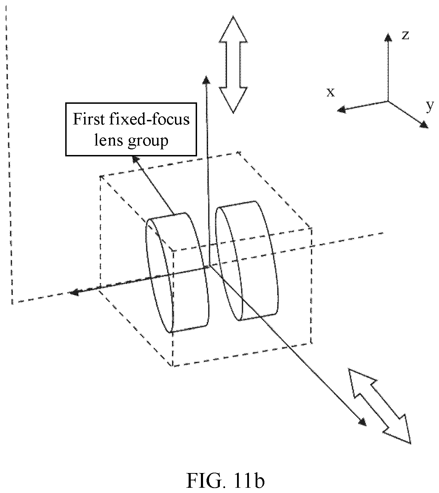

For example, as shown in FIG. 11b, when the camera module shakes, the motor may drive the first fixed-focus lens group (or the second fixed-focus lens group) to translate along a y axis and/or a z axis in a three-dimensional space, to adjust the optical path of the first beam or the second beam in the camera module, and correct a position of the beam entering the image sensor after the beam is transmitted through the first fixed-focus lens group (or the second fixed-focus lens group), so as to eliminate impact of image quality degradation caused by shaking of the camera module. A plane in which the y axis and a z axis are located is perpendicular to the first optical axis of the first fixed-focus lens group. The y axis is parallel to the horizontal plane, and perpendicular to the first optical axis of the first fixed-focus lens group or the second optical axis of the second fixed-focus lens group. The z axis is perpendicular to the y axis. It may be understood that, the motor may be disposed next to, for example, on a front, rear, left, or right side of, the first fixed-focus lens group (or the second fixed-focus lens group), which is not specifically limited in this application.

In a possible design, as shown in FIG. 6a, when the camera module is out of focus, the motor is configured to control the first optical steering element, the first optical path switching element, and the image sensor to move along a direction of the first optical axis or the second optical axis, to adjust the optical path of the first beam or the second beam in the camera module, so as to implement a focus function.

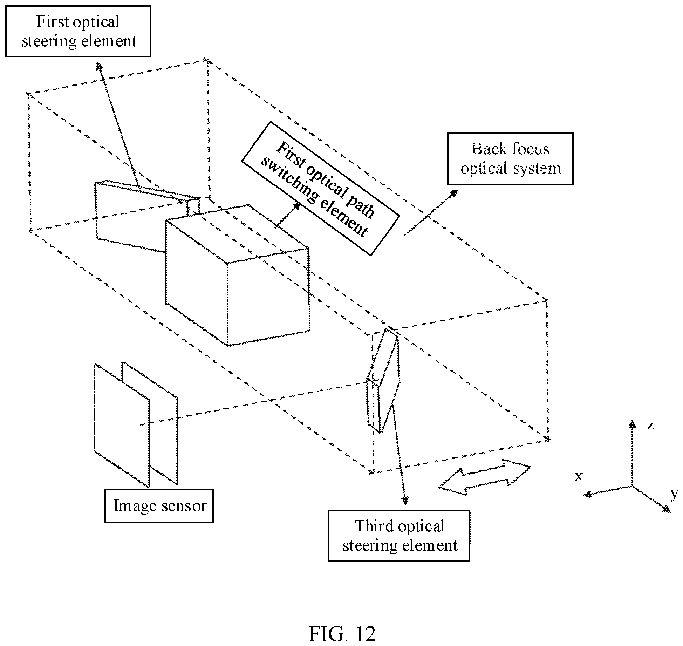

In a possible design, when the camera module is out of focus, the motor may control the first optical steering element, the first optical path switching element, and the third optical steering element to move along a direction of the first optical axis or the second optical axis, to adjust the optical path of the first beam or the second beam in the camera module, so as to implement an auto-focus function of the camera module. As shown in FIG. 12, the first optical steering element, the first optical path switching element, and the third optical steering element may form a back focus optical system. When the camera module is out of focus, the motor may drive the back focus optical system to move along a direction of an x axis, to ensure that a beam can be focused on the image sensor with high quality, thereby implementing optical auto-focus. The x axis is parallel to the first optical axis of the first fixed-focus lens group or the second optical axis of the second fixed-focus lens group.

Optionally, as shown in FIG. 12, in this solution, the first optical steering element and the first optical path switching element may alternatively be kept still, and the motor drives the third optical steering element and the image sensor to move along a direction of a y axis, to change an effective length of an optical path between the first optical path switching element and the image sensor, so as to implement a focus function. The y axis is parallel to a horizontal plane, and perpendicular to the first optical axis of the first fixed-focus lens group or the second optical axis of the second fixed-focus lens group.

It should be noted that, the camera module may be provided with a set of motors, and the set of motors may include one or more motors. If one motor is included, the motor may be controlled to push related optical elements to implement focus and optical image stabilization functions. If a plurality of motors are included, for example, a focus motor for implementing a focus function and an optical image stabilization motor for implementing an optical image stabilization function are included, during focus control, the camera module may start the focus motor to push a related optical element, and during optical image stabilization control, the camera module may start the optical image stabilization motor to push a related optical element.

The foregoing is mainly described by using an example in which the camera module includes two fixed-focus lens groups. It may be understood that the camera module may alternatively include more than two fixed-focus lens groups, to implement switching between more than two focal lengths.

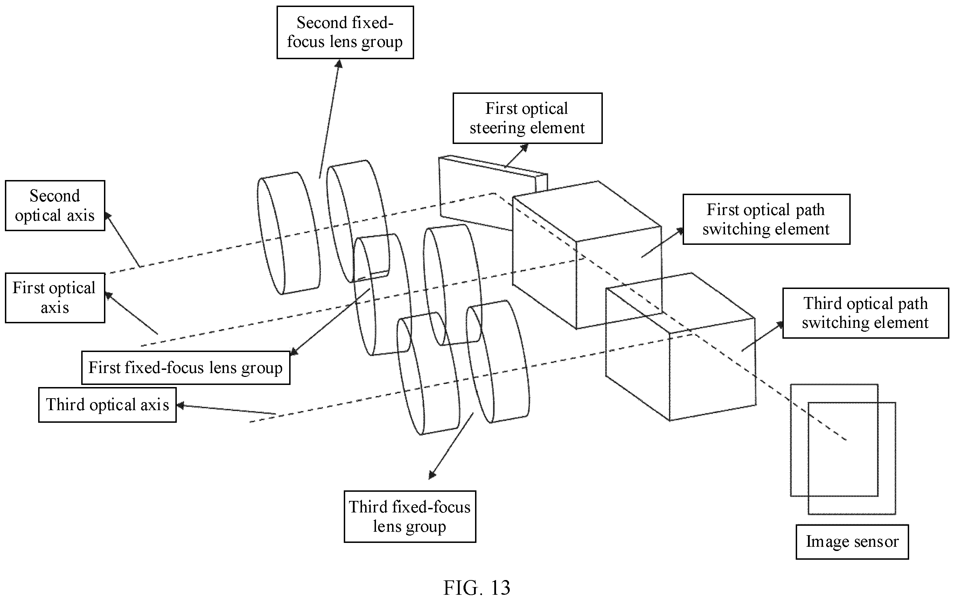

For example, FIG. 13 is a schematic diagram of a camera module that can implement switching between three focal lengths. The camera module may include three fixed-focus lens groups, including a first fixed-focus lens group, a second fixed-focus lens group, and a third fixed-focus lens group. Optical axes of the three fixed-focus lens groups are parallel to each other, and the three fixed-focus lens groups respectively correspond to three different focal lengths. The camera module further includes a third optical path switching element, the third optical path switching element is disposed along a third optical axis of the third fixed-focus lens group, and the third optical path switching element is located between a first optical path switching element and an image sensor. For functions and disposing manners of other elements in FIG. 13, refer to relevant descriptions above. Details are not described herein again. When the first focal length needs to be implemented, the first optical path switching element deflects a direction of the first beam from the first fixed-focus lens group, that is, reflects the first beam from the first fixed-focus lens group, and the third optical path switching element does not perform a function of deflecting the first beam from the first optical path switching element. Finally, the first beam can reach the image sensor. When the second focal length needs to be implemented, the first optical path switching element and the third optical path switching element do not perform a function of deflecting the second beam from the second fixed-focus lens group. Finally, the second beam can reach the image sensor. When a third focal length needs to be implemented, the third optical path switching element implements a function of deflecting a third beam from the third fixed-focus lens group, that is, reflects the third beam to the image sensor.

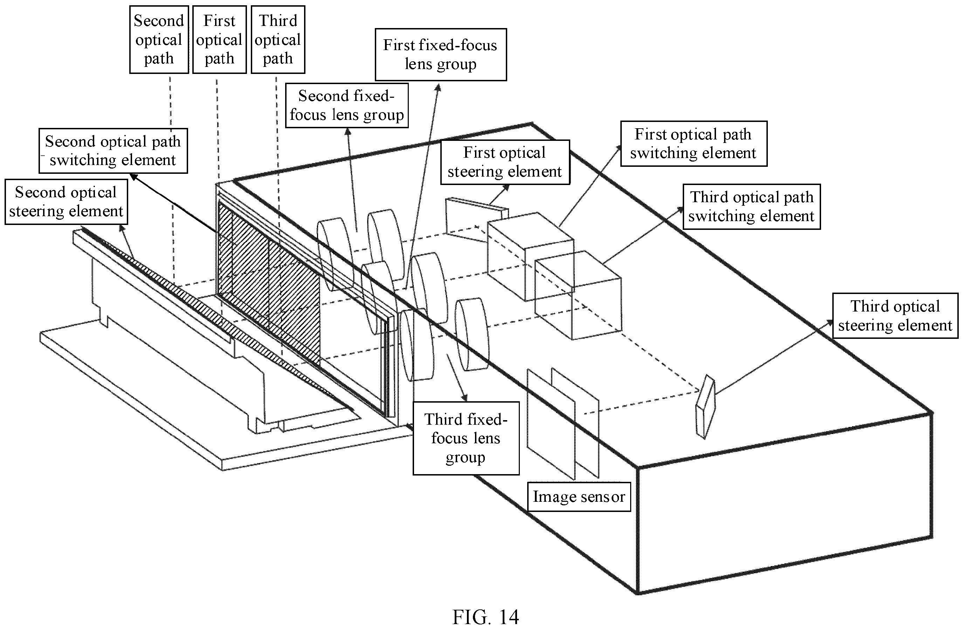

Further, as shown in FIG. 14, the camera module including the three fixed-focus lens groups may further include elements such as a second optical path switching element, a second optical steering element, and a third optical steering element. For functions and disposing manners thereof, refer to relevant descriptions above. Details are not described herein again.

According to the camera module provided in this embodiment of this application, beams from different fixed-focus lens groups can be controlled based on different signals to reach the image sensor, to implement switching between a plurality of focal length segments, which can not only implement high-definition and high-sharpness image quality at an independent fixed-focus module level, but also enrich use scenarios of a user. Moreover, beams from different fixed-focus lens groups can reach the same image sensor and can be imaged at the image sensor, making it unnecessary to dispose one image sensor for each fixed-focus lens, which can reduce hardware costs on the basis of implementing a zoom function.

Moreover, compared with the dual-camera-module structure in the conventional technology in which one set of focus motors needs to be disposed in each camera, the camera module provided in this embodiment of this application is a single camera module, which can perform focus and optical image stabilization by using one set of motors, thereby further reducing hardware costs.

An embodiment of this application further provides an electronic device. The foregoing camera module may be disposed in the electronic device. The electronic device may be, for example, a device such as a mobile phone, a tablet computer, a desktop computer, a laptop computer, an ultra-mobile personal computer (ultra-mobile personal computer, UMPC), a handheld computer, a netbook, or a personal digital assistant (personal digital assistant, PDA).

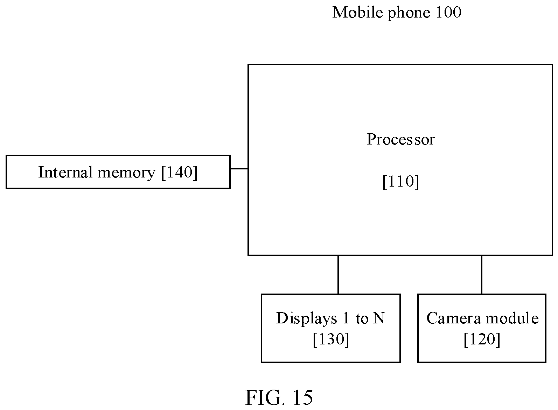

For example, as shown in FIG. 15, the electronic device may be specifically a mobile phone 100. The mobile phone 100 may include a processor 110, a camera module 120, a display 130, an internal memory 140, and the like.

The schematic structure in this embodiment of the present invention does not constitute a limitation on the mobile phone 100, which may include more or fewer components than those shown in the figure, or have some components combined, or have some components split, or have a different component arrangement. The components shown in the figure may be implemented by hardware, software, or a combination of software and hardware.

The camera module 120 may be configured to capture a still image or a video. An object is projected to the image sensor by generating an optical image through a fixed-focus lens group in the camera module. A light-sensitive element of a camera of the color camera module may be a charge coupled device (charge coupled device, CCD) or a complementary metal-oxide-semiconductor (complementary metal-oxide-semiconductor, CMOS) phototransistor. The image sensor converts an optical signal into an electrical signal, and then may transmit the electrical signal to the processor to convert the electrical signal into a digital image signal.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. A memory may be further disposed in the processor 110, to store signals and data.

The processor 110 may generate a corresponding signal and send the signal to the camera module. For example, when determining that the first focal length needs to be implemented, the processor may generate the first control signal, and send the first control signal to the camera module.

The processor 110 may be further configured to control the focus motor and the optical image stabilization motor of the camera module to push related optical elements, so as to implement focus and optical image stabilization functions of the camera module.

In some embodiments, the processor 110 may include an interface. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The internal memory 140 may be configured to store computer-executable program code. The executable program code includes . The processor 110 runs the signal stored in the internal memory 140, to execute various function applications and data processing of the mobile phone 100.

The display 130 is configured to display an image, a video, and the like. The display includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a mini-Led, a micro-Led, a micro-oLed, a quantum dot light-emitting diode (quantum dot light-emitting diodes, QLED), or the like. In some embodiments, the mobile phone 100 may include one or N displays. N is a positive integer greater than 1.

As shown in FIG. 15, the mobile phone 100 may implement a photographing function by using the camera module 120, the display 130, the processor 110, and the like.

It may be understood that the mobile phone 100 may have more or fewer components than those shown in FIG. 15, may combine two or more components, or may have different component configurations. The components shown in FIG. 15 may be implemented in hardware, software, or a combination of hardware and software, including one or more signal processing or application specific integrated circuits.

An embodiment further provides a computer storage medium. The computer storage medium stores computer instructions, and when the computer instructions are run on an electronic device, the electronic device is enabled to perform the foregoing related method steps to implement the photographing method in the foregoing embodiment. An embodiment further provides a computer program product. When the computer program product runs on a computer, the computer is enabled to perform the foregoing related steps to implement the photographing method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the photographing method in the foregoing method embodiments.

The electronic device, the computer storage medium, the computer program product, and the chip provided in the embodiments are all configured to perform the corresponding method provided above. Therefore, for beneficial effects that can be achieved by them, refer to beneficial effects in the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising a first optical path switching element, a first optical steering element, a first fixed-focus lens group, a second fixed-focus lens group, and an image sensor, wherein the first fixed-focus lens group and the first optical path switching element are disposed along a first optical axis, and the first optical axis is an optical axis of the first fixed-focus lens group; the second fixed-focus lens group and the first optical steering element are disposed along a second optical axis, the second optical axis is an optical axis of the second fixed-focus lens group, and the first optical axis and the second optical axis are parallel to each other;
the first fixed-focus lens group is configured to receive a first beam from the outside of the camera module;
the second fixed-focus lens group is configured to receive a second beam from the outside of the camera module;
the first optical steering element is configured to change an optical path of the second beam from the second fixed-focus lens group, so that the second beam with the optical path changed is directed to the first optical path switching element and the image sensor;
the first optical path switching element whose position or working state is variable is configured to change an optical path of the first beam from the first fixed-focus lens group, so that the first beam with the optical path changed is directed to the image sensor, or the second beam with the optical path changed is directed to the image sensor;
the image sensor is configured to receive the first beam with the optical path changed or receive the second beam with the optical path changed, and generate an image; and
the first fixed-focus lens group has a first focal length, the second fixed-focus lens group has a second focal length, and the first focal length is different from the second focal length.

2. The camera module according to claim 1, wherein the first optical path switching element is a plane mirror or a prism, and an angle between a plane in which the plane mirror or the prism is located and a plane in which the first fixed-focus lens group is located is 45°, alternatively, the plane in which the plane mirror or the prism is located and the plane in which the first fixed-focus lens group is located are parallel to each other.

3. The camera module according to claim 1, wherein the first optical path switching element is formed by bonding two prisms, a first slot is reserved between bonded surfaces of the two prisms, an angle between a plane in which the first slot is located and a plane in which the first fixed-focus lens group is located is 45°, and the first slot is filled with a substance having a first refractive index, or the first slot is filled with a substance having a second refractive index, and the first refractive index is greater than the second refractive index.

4. The camera module according to any one of claims 1 to 3, further comprising a second optical path switching element, wherein the second optical path switching element is disposed in front of the first fixed-focus lens group or the second fixed-focus lens group, and the second optical path switching element whose position or working state is variable is configured to enable the first beam to enter the first fixed-focus lens group and prevent the second beam from entering the second fixed-focus lens group, or configured to enable the second beam to enter the second fixed-focus lens group and prevent the first beam from entering the first fixed-focus lens group.

5. The camera module according to claim 4, wherein the second optical path switching element is a shade, and the shade is located directly in front of the second fixed-focus lens group, or the shade is located directly in front of the first fixed-focus lens group.

6. The camera module according to claim 4, wherein the second optical path switching element comprises two parallel sheets, a second slot is reserved between the two parallel sheets, the second slot comprises a first area and a second area, the first area is located directly in front of the first fixed-focus lens group, the second area is located directly in front of the second fixed-focus lens group, and the first area of the second slot is filled with a transparent substance and the second area is filled with an opaque substance, or the first area of the second slot is filled with the opaque substance and the second area is filled with the transparent substance.

7. The camera module according to any one of claims 1 to 6, further comprising a second optical steering element, wherein the second optical steering element is disposed in front of the first fixed-focus lens group and the second fixed-focus lens group, the second optical steering element is disposed obliquely with respect to the plane of the first fixed-focus lens group or the plane of the second fixed-focus lens group, and the second optical steering element is configured to reflect the first beam and the second beam from the outside of the camera module, to bend an optical path of the first beam before the first beam enters the first fixed-focus lens group or bend an optical path of the second beam before the second beam enters the second fixed-focus lens group.

8. The camera module according to claim 7, further comprising a motor, wherein the motor is configured to control the second optical steering element to rotate along a rotation axis parallel to the first optical axis or parallel to a horizontal plane and perpendicular to the first optical axis.

9. The camera module according to any one of claims 1 to 8, further comprising a motor, wherein the motor is configured to control the first fixed-focus lens group or the second fixed-focus lens group to translate along a direction perpendicular to the horizontal plane or a direction parallel to the horizontal plane and parallel to the first optical axis.

10. The camera module according to any one of claims 1 to 9, further comprising a motor, wherein the motor is configured to control the first optical steering element, the first optical path switching element, and the image sensor to move along the direction of the first optical axis or the second optical axis.

11. A camera module, comprising a first optical path switching element, a first optical steering element, a first fixed-focus lens group, a second fixed-focus lens group, an image sensor, and a third optical steering element, wherein the first fixed-focus lens group and the first optical path switching element are disposed along a first optical axis, and the first optical axis is an optical axis of the first fixed-focus lens group; the second fixed-focus lens group and the first optical steering element are disposed along a second optical axis, the second optical axis is an optical axis of the second fixed-focus lens group, the first optical axis and the second optical axis are parallel to each other, and an angle between the third optical steering element and each of the image sensor and the first optical path switching element is 45°;
the first fixed-focus lens group is configured to receive a first beam from the outside of the camera module;
the second fixed-focus lens group is configured to receive a second beam from the outside of the camera module;
the first optical steering element is configured to change an optical path of the second beam from the second fixed-focus lens group, so that the second beam with the optical path changed is directed to the first optical path switching element and the third optical steering element;
the first optical path switching element whose position or working state is variable is configured to change an optical path of the first beam from the first fixed-focus lens group, so that the first beam with the optical path changed is directed to the third optical steering element, or the second beam with the optical path changed is directed to the third optical steering element;
the third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor;
the image sensor is configured to receive the first beam with the optical path further changed or receive the second beam with the optical path further changed, and generate an image; and
the first fixed-focus lens group has a first focal length, the second fixed-focus lens group has a second focal length, and the first focal length is different from the second focal length.

12. The camera module according to claim 11, further comprising a motor, wherein the motor is configured to control the first optical steering element, the first optical path switching element, and the third optical steering element to move along a direction of the first optical axis or the second optical axis; alternatively,
the motor is configured to control the third optical steering element and the image sensor to move along a direction parallel to a horizontal plane and perpendicular to the first optical axis or the second optical axis.

13. The camera module according to any one of claims 1 to 12, wherein
the first focal length or the second focal length is 2 to 20 times a focal length of a normal lens.

14. A photographing method, applied to a camera module, wherein the camera module comprises a first optical path switching element, a first optical steering element, a first fixed-focus lens group, a second fixed-focus lens group, and an image sensor, wherein the first fixed-focus lens group and the first optical path switching element are disposed along a first optical axis, and the first optical axis is an optical axis of the first fixed-focus lens group; the second fixed-focus lens group and the first optical steering element are disposed along a second optical axis, the second optical axis is an optical axis of the second fixed-focus lens group, and the first optical axis and the second optical axis are parallel to each other; the first fixed-focus lens group is configured to receive a first beam from the outside of the camera module; the second fixed-focus lens group is configured to receive a second beam from the outside of the camera module; the first optical steering element is configured to change an optical path of the second beam from the second fixed-focus lens group, so that the second beam with the optical path changed is directed to the first optical path switching element and the image sensor; the first optical path switching element whose position or working state is variable is configured to change an optical path of the first beam from the first fixed-focus lens group, so that the first beam with the optical path changed is directed to the image sensor, or the second beam with the optical path changed is directed to the image sensor; the image sensor is configured to receive the first beam with the optical path changed or receive the second beam with the optical path changed, and generate an image; and the first fixed-focus lens group has a first focal length, the second fixed-focus lens group has a second focal length, and the first focal length is different from the second focal length; and the method comprises:
when receiving a first control signal, the first optical path switching element enters a first position or a first state, to change the optical path of the first beam from the first fixed-focus lens group, so that the first beam with the optical path changed reaches the image sensor for imaging; and when receiving a second control signal, entering, by the first optical path switching element, a second position or a second state, to control the second beam from the first optical steering element to reach the image sensor for imaging.

15. The photographing method according to claim 14, wherein the first optical path switching element is a plane mirror or a prism; the entering, by the first optical path switching element, a first position, to change the optical path of the first beam from the first fixed-focus lens group, so that the first beam with the optical path changed reaches the image sensor for imaging comprises:
an angle between a plane in which the plane mirror or the prism is located and a plane in which the first fixed-focus lens group is located is 45°, to reflect the first beam from the first fixed-focus lens group to the image sensor for imaging, and block or reflect the second beam from the second fixed-focus lens group and reflected by the first optical steering element, so as to prevent the second beam from reaching the image sensor for imaging; and
the entering, by the first optical path switching element, a second position, to control the second beam from the first optical steering element to reach the image sensor for imaging comprises:
the plane in which the plane mirror or the prism is located and the plane in which the first fixed-focus lens group is located are parallel to each other, to control the second beam from the first optical steering element to reach the image sensor for imaging without passing through the first optical path switching element, and block or reflect the first beam from the first fixed-focus lens group, so as to prevent the first beam from reaching the image sensor for imaging.

16. The photographing method according to claim 14, wherein the first optical path switching element is formed by bonding two prisms, a first slot is reserved between bonded surfaces of the two prisms, and an angle between a plane in which the first slot is located and a plane in which the first fixed-focus lens group is located is 45°; the entering, by the first optical path switching element, a first state, to change the optical path of the first beam from the first fixed-focus lens group, so that the first beam with the optical path changed reaches the image sensor for imaging comprises:
the first slot is filled with a substance having a first refractive index, and the plane in which the first slot is located reflects the first beam from the first fixed-focus lens group to the image sensor for imaging; and
the entering, by the first optical path switching element, a second state, to control the second beam from the first optical steering element to reach the image sensor for imaging comprises:
the first slot is filled with a substance having a second refractive index, to control the second beam from the first optical steering element to be transmitted through the first slot to the image sensor for imaging; and
the first refractive index is greater than the second refractive index

17. The photographing method according to any one of claims 14 to 16, further comprising a second optical path switching element, wherein the second optical path switching element is disposed in front of the first fixed-focus lens group or the second fixed-focus lens group, and a position or a working state of the second optical path switching element is variable, wherein
when receiving a third control signal, the second optical path switching element enters a third position or a third state, to prevent the second beam from entering the second fixed-focus lens group and enable the first beam to enter the first fixed-focus lens group; and when receiving a fourth control signal, the second optical path switching element enters a fourth position or a fourth state, to prevent the first beam from entering the first fixed-focus lens group and enable the second beam to enter the second fixed-focus lens group.

18. The photographing method according to claim 17, wherein the second optical path switching element is a shade; that the second optical path switching element enters a third position, to prevent the second beam from entering the second fixed-focus lens group and enable the first beam to enter the first fixed-focus lens group comprises:
the shade is located directly in front of the second fixed-focus lens group, and blocks the second beam but does not block the first beam, so that the first beam enters the first fixed-focus lens group; and
that the second optical path switching element enters a fourth position, to prevent the first beam from entering the first fixed-focus lens group and enable the second beam to enter the second fixed-focus lens group comprises:
the shade is located directly in front of the first fixed-focus lens group, and blocks the first beam but does not block the second beam, so that the second beam enters the second fixed-focus lens group.

19. The photographing method according to claim 17, wherein the second optical path switching element comprises two parallel sheets, a second slot is reserved between the two parallel sheets, the second slot comprises a first area and a second area, the first area is located directly in front of the first fixed-focus lens group, and the second area is located directly in front of the second fixed-focus lens group; that the second optical path switching element enters a third state, to prevent the second beam from entering the second fixed-focus lens group and enable the first beam to enter the first fixed-focus lens group comprises:
the first area of the second slot is filled with a transparent substance and the second area is filled with an opaque substance, to transmit the first beam and block the second beam; and
that the second optical path switching element enters a fourth state, to prevent the first beam from entering the first fixed-focus lens group and enable the second beam to enter the second fixed-focus lens group comprises:
the first area of the second slot is filled with the opaque substance and the second area is filled with the transparent substance, to transmit the second beam and block the first beam.

20. The photographing method according to any one of claims 14 to 19, further comprising a second optical steering element, wherein the second optical steering element is disposed in front of the first fixed-focus lens group and the second fixed-focus lens group, the second optical steering element is disposed obliquely with respect to the plane of the first fixed-focus lens group or the plane of the second fixed-focus lens group, and the second optical steering element reflects the first beam and the second beam from the outside of the camera module, to bend an optical path of the first beam before the first beam enters the first fixed-focus lens group or bend an optical path of the second beam before the second beam enters the second fixed-focus lens group.

21. The photographing method according to claim 20, further comprising a motor, wherein when the camera module shakes, the motor controls the second optical steering element to rotate along a rotation axis parallel to the first optical axis or parallel to a horizontal plane and perpendicular to the first optical axis, to adjust an angle at which the first beam or the second beam enters the second optical steering element.

22. The photographing method according to any one of claims 14 to 21, further comprising a motor, wherein when the camera module shakes, the motor controls the first fixed-focus lens group or the second fixed-focus lens group to translate along a direction perpendicular to the horizontal plane or a direction parallel to the horizontal plane and parallel to the first optical axis, to adjust the optical path of the first beam or the second beam in the camera module.

23. The photographing method according to any one of claims 14 to 22, further comprising a motor, wherein when the camera module is defocused, the motor controls the first optical steering element, the first optical path switching element, and the image sensor to move along the direction of the first optical axis or the second optical axis, to adjust the optical path of the first beam or the second beam in the camera module.

24. A photographing method, applied to a camera module, wherein the camera module comprises a first optical path switching element, a first optical steering element, a first fixed-focus lens group, a second fixed-focus lens group, an image sensor, and a third optical steering element, wherein the first fixed-focus lens group and the first optical path switching element are disposed along a first optical axis, and the first optical axis is an optical axis of the first fixed-focus lens group; the second fixed-focus lens group and the first optical steering element are disposed along a second optical axis, the second optical axis is an optical axis of the second fixed-focus lens group, the first optical axis and the second optical axis are parallel to each other, and an angle between the third optical steering element and each of the image sensor and the first optical path switching element is 45°; the first fixed-focus lens group is configured to receive a first beam from the outside of the camera module; the second fixed-focus lens group is configured to receive a second beam from the outside of the camera module; the first optical steering element is configured to change an optical path of the second beam from the second fixed-focus lens group, so that the second beam with the optical path changed is directed to the first optical path switching element and the third optical steering element; the first optical path switching element whose position or working state is variable is configured to change an optical path of the first beam from the first fixed-focus lens group, so that the first beam with the optical path changed is directed to the third optical steering element, or the second beam with the optical path changed is directed to the third optical steering element; the third optical steering element is configured to further change the optical path of the first beam with the optical path changed, so that the first beam with the optical path further changed is directed to the image sensor, or further change the optical path of the second beam with the optical path changed, so that the second beam with the optical path further changed is directed to the image sensor; the image sensor is configured to receive the first beam with the optical path further changed or receive the second beam with the optical path further changed, and generate an image; and the first fixed-focus lens group has a first focal length, the second fixed-focus lens group has a second focal length, and the first focal length is different from the second focal length; and the method comprises:
when receiving a first control signal, the first optical path switching element enters a first position or a first state, to change the optical path of the first beam from the first fixed-focus lens group, so that the first beam with the optical path changed reaches, through the third optical steering element, the image sensor for imaging; and when receiving a second control signal, the first optical path switching element enters a second position or a second state, to enable the second beam from the first optical steering element to reach, through the third optical steering element, the image sensor for imaging.

25. The photographing method according to claim 24, further comprising a motor, wherein
when the camera module is defocused, the motor controls the first optical steering element, the first optical path switching element, and the third optical steering element to move along a direction of the first optical axis or the second optical axis, to adjust the optical path of the first beam or the second beam in the camera module; alternatively,
when the camera module is defocused, the motor controls the third optical steering element and the image sensor to move along a direction parallel to a horizontal plane and perpendicular to the first optical axis or the second optical axis, to adjust the optical path of the first beam or the second beam in the camera module.

26. The photographing method according to any one of claims 14 to 25, wherein
the first focal length or the second focal length is 2 to 20 times a focal length of a normal lens.

27. An electronic device, comprising a processor, a memory, a bus, and a camera module, wherein the processor, the memory, and the camera module are connected to each other by using the bus, the memory is configured to store a program and instructions, and the processor is configured to invoke the program and the instructions stored in the memory to control the camera module;
the camera module comprises a first optical path switching element, a first optical steering element, a first fixed-focus lens group, a second fixed-focus lens group, and an image sensor, wherein the first fixed-focus lens group and the first optical path switching element are disposed along a first optical axis, and the first optical axis is an optical axis of the first fixed-focus lens group; the second fixed-focus lens group and the first optical steering element are disposed along a second optical axis, the second optical axis is an optical axis of the second fixed-focus lens group, and first optical axis and the second optical axis are parallel to each other;
the first fixed-focus lens group is configured to receive a first beam from the outside of the camera module;
the second fixed-focus lens group is configured to receive a second beam from the outside of the camera module;
the first optical steering element is configured to change an optical path of the second beam from the second fixed-focus lens group, so that the second beam with the optical path changed is directed to the first optical path switching element;
the first optical path switching element whose position or working state is variable is configured to change an optical path of the first beam from the first fixed-focus lens group, so that the first beam with the optical path changed is directed to the image sensor, or the second beam with the optical path changed is directed to the image sensor;
the image sensor is configured to receive the first beam with the optical path changed or receive the second beam with the optical path changed, and generate an image; and
the first fixed-focus lens group has a first focal length, the second fixed-focus lens group has a second focal length, and the first focal length is different from the second focal length.
